# EUROPEAN PATENT APPLICATION

(11) **EP 4 560 766 A2**
(43) Date of publication of application: **28.05.2025**
(21) Application number: 24215637.0
(22) Date of filing: 27.11.2024
(51) Int. Cl.: H01M 10/0566, H01M 50/595

(54) **SECONDARY BATTERY AND ELECTRONIC APPARATUS**

(30) Priority: 27.11.2023 CN 202311599300
(71) Applicant: Dongguan Amperex Technology Limited, Dongguan City, Guangdong Province 523000 (CN)
(72) Inventor: WANG, Rui, Dongguan City, Guangdong Province, People s Republic of China, 523000 (CN); LU, Jianxin, Dongguan City, Guangdong Province, People s Republic of China, 523000 (CN); TANG, Chao, Dongguan City, Guangdong Province, People s Republic of China, 523000 (CN)
(74) Representative: Icosa

(57) **Abstract**

A secondary battery includes an electrode assembly (10), a tab (21,22), an electrolyte, and one or more adhesive components (30). Along a thickness direction of the electrode assembly (10), the electrode assembly (10) includes first surface (11) and second surface (12) disposed opposite to each other, wherein the first surface (11) and the second surface (12) are surfaces formed by length direction and width direction of the electrode assembly (10), and the adhesive component (30) extends from the first surface(11) to the second surface(12). A mass of the electrolyte is m g, a capacity of the secondary battery is C Ah, an electrolyte retention of the secondary battery is Q g/Ah, and an area of the one or more adhesive components (30) is S mm², Q=m/C, 80≤S/Q≤2500, and 0.6≤Q≤2.7.

## Description

### CROSS REFERENCE TO RELATED APPLICATIONS

This application relates to the field of electrochemistry technology, particularly to a secondary battery and an electronic apparatus.

### BACKGROUND

Secondary batteries (such as lithium-ion batteries) are widely used in various fields such as smartphones, wearable devices, consumer drones, and electric vehicles, due to their high energy density, long cycle life, and lack of memory effect. With the widespread application of lithium-ion batteries in the aforementioned fields, there is an increasing demand for improved cycle life.

To ensure a longer cycle life of lithium-ion batteries, it is necessary to have a sufficient amount of electrolyte to compensate for electrolyte consumption during cycling, in order to ensure lithium-ion transport. However, when there is a large amount of electrolyte, free electrolyte tends to accumulate at both ends of the lithium-ion battery, soaking the separator. This leads to a deterioration in the adhesion between the separator and the positive electrode material, as well as between the separator and the negative electrode material, resulting in a reduced cycle life of the lithium-ion battery.

### SUMMARY

The purpose of this application is to provide a secondary battery and an electronic apparatus that can improve the cycle life of the secondary battery while maintaining its energy density. Specific technical solutions are as follows:

According to a first aspect of this application, a secondary battery is provided, including an electrode assembly, a tab, an electrolyte, and one or more adhesive components. Along a thickness direction of the electrode assembly, the electrode assembly includes a first surface and a second surface disposed opposite to each other. The first surface and the second surface are surface formed by a length direction and a width direction of the electrode assembly, and the adhesive component extends from the first surface to the second surface. A mass of the electrolyte is m g, a capacity of the secondary battery is C Ah, an electrolyte retention of the secondary battery is Q g/Ah, and an area of the one or more adhesive components is S mm², wherein Q=m/C, 80≤S/Q≤2500, preferably 400≤S/Q≤2000, and 0.6≤Q≤2.7. By controlling the inclusion of one or more adhesive components in the secondary battery, the position of the adhesive component, the ratio of the area of the one and more adhesive components to the electrolyte retention range, and the value of the electrolyte retention range within the range of this application, the adhesion between the separator and the positive electrode material, as well as between the separator and the negative electrode material can be improved, thereby enhancing the cycle life of the secondary battery while maintaining its energy density.

In one embodiment of this application, 50≤S≤2500. By controlling the value of S within the range of this application, the adhesive component has an appropriate total area, which further improves the cycle life of the secondary battery while maintaining its energy density.

In one embodiment of this application, 0.2≤m≤15, and 0.3≤C≤8. By controlling the values of m and C within the range of this application, the mass of the electrolyte of the secondary battery, the capacity of the secondary battery, and the total area of the adhesive components can be matched, resulting in a higher energy density and longer cycle life of the secondary battery.

In one embodiment of this application, an area of each of the one or more adhesive components is S1 mm², 50<S1<810, the one or more adheasive components has N adhesive componentsis N, 1≤N≤10, and N is a positive integer. Each adhesive component is provided on the first surface, the second surface, and at least one side surface. The side surface is a surface formed by length direction and thickness direction of the electrode assembly or a surface formed by width and thickness directions of the electrode assembly. By controlling the values of S1, N, and the position of the adhesive components within the range of this application, each adhesive component has an appropriate area, and the secondary battery has an appropriate number of adhesive components. This ensures that, while maintaining the energy density of the secondary battery, the separator can bond well with both the positive electrode material and the negative electrode material. At the same time, it can effectively ensure the transmission and infiltration of the electrolyte, thereby further improving the cycle life of the secondary battery.

In one embodiment of this application, a thickness of each of the one or more adhesive components is D µm, wherein 10≤D≤30, preferably 15≤D≤25. By controlling the value of D within the range of this application, the adhesive component has an appropriate thickness, resulting in a higher volumetric energy density of the secondary battery while considering its weight energy density. It also ensures the mechanical strength of the adhesive component, leading to better adhesion of the adhesive component and further improvement in the cycle life of the secondary battery.

In one embodiment of this application, the electrolyte includes a linear ester, and the linear ester includes at least one selected from the group consisting of linear carbonate ester and linear carboxylic ester.

The linear carbonate ester includes at least one selected from the group consisting of dimethyl carbonate, methyl ethyl carbonate, diethyl carbonate, methyl propyl carbonate, dioctyl carbonate, dipentyl carbonate, ethyl isobutyl carbonate, isopropyl methyl carbonate, di-n-butyl carbonate, di-isopropyl carbonate, and dipropyl carbonate.

The linear carboxylic ester includes at least one selected from the group consisting of ethyl acetate, propyl acetate, butyl acetate, ethyl propionate, propyl propionate, butyl butyrate, methyl butyrate, methyl isovalerate, propyl hexanoate, and isobutyl acetate.

Based on the mass of the electrolyte, the linear ester has a mass percentage of A1%, wherein 0.03≤A1/S1≤1.2. The mass percentage of the linear ester in the electrolyte affects the swelling and dissolution of the bonding layer polymer of the adhesive component, thereby affecting the adhesion effect of the adhesive component. By controlling the inclusion of the linear ester in the electrolyte, the type of linear ester, and the value of A1/S1 within the range of this application, the swelling of the bonding layer polymer of the adhesive component is moderate, resulting in better adhesion of the adhesive component and further improvement in the cycle life of the secondary battery.

In one embodiment of this application, 20≤A1≤70. By controlling the value of A1 within the range of this application, the electrolyte has an appropriate viscosity and can effectively dissociate lithium salts, thereby further improving the cycle life of the secondary battery.

In one embodiment of this application, the electrolyte includes ethyl 2,2-difluoroacetate, and based on the mass of the electrolyte, the ethyl 2,2-difluoroacetate has a mass percentage of A6%, wherein 2≤A6≤20. By controlling the inclusion of ethyl 2,2-difluoroacetate in the electrolyte and the percentage of ethyl 2,2-difluoroacetate within the range of this application, the swelling of the bonding layer polymer of the adhesive component is moderate, resulting in better adhesion of the adhesive component and further improvement in the cycle life of the secondary battery.

In one embodiment of this application, the electrolyte further includes a sulfur-oxygen double bond compound, and the sulfur-oxygen double bond compound includes at least one selected from the group consisting of 1,3-propane sultone, vinyl sulfate, propylene sultone, 3-fluoro-1,3-propane sultone, 1,2-propane sultone, 1,4-butane sultone, 2,4-butane sultone, and

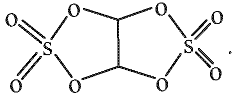

Based on the mass of the electrolyte, the sulfur-oxygen double bond compound has a mass percentage of A2%, wherein 0.3<A2<4.8. By controlling the inclusion of the sulfur-oxygen double bond compound in the electrolyte, the type of sulfur-oxygen double bond compound, and the percentage of the sulfur-oxygen double bond compound within the range of this application, a more stable solid electrolyte interface film can be formed on the surface of the negative electrode material layer. The solid electrolyte interface film contains organic polymer components, which can further improve the contact between the negative electrode material layer and the separator, facilitating lithium-ion transport and enhancing the cycle life of the secondary battery.

In one embodiment of this application, 0.3≤A2×Q≤11. By controlling the value of A2×Q within the range of this application, the mass percentage of the sulfur-oxygen double bond compounds can match the capacity of the secondary battery and the mass of the electrolyte, thereby achieving a higher cycle life of the secondary battery with a lower electrolyte retention range.

In one embodiment of this application, the electrolyte includes a nitrile compound, and based on the mass of the electrolyte, the nitrile compound has a mass percentage of A7%, wherein 0.01<A7<9.8, preferably 2.8≤A7≤6.8; and the nitrile compound includes at least one selected from the group consisting of malononitrile, succinonitrile, glutaronitrile, adiponitrile, pimelonitrile, suberonitrile, 3,3'-oxydipropionitrile, hex-2-enedonitrile, fumaronitrile, 2-pentenedonitrile, methylglutaronitrile, 4-cyanopimelonitrile, (Z)-But-2-enedonitrile, 2,2,3,3-tetrafluorobutanedinitrile, ethylene glycol bis(propionitrile) ether, 1,3,6-hexane trinitrile, 1,3,5-pentanetricarbonitrile, 4-(2-cyanoethyl)heptane dinitrile, and 1,2,3-tris(2-cyanoethoxy)propane. By controlling the inclusion of the nitrile compound in the electrolyte, the type of the nitrile compound, and the percentage of the nitrile compound within the range of this application, the damage of the F-containing separator polymer coating to the positive electrode material can be suppressed, resulting in a higher cycle life of the secondary battery.

In one embodiment of this application, the electrolyte further includes a compound of formula (I): 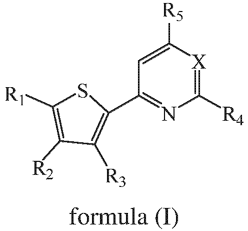
where X is selected from CR₆ or N;
R₁, R₂, and R₃ are each independently selected from a hydrogen atom, a halogen, a C2-C5 carbonyl group, a C1-C5 aldehyde group, an unsubstituted or Ra-substituted C1-C5 alkyl group, an unsubstituted or Ra-substituted C2-C5 alkenyl group, an unsubstituted or Ra-substituted C2-C5 alkynyl group, an unsubstituted or Ra-substituted C3-C5 N heterocycloalkyl group, or a C3-C5 N heteroaryl group;
R₄, R₅ and R₆ are each independently selected from a hydrogen atom, a C1-C5 alkylthio group, C2-C5 thioether, a C3-C5 N heterocycloalkyl group, a C3-C5 N heteroaryl group, an unsubstituted or Ra-substituted C1-C5 alkyl group, an unsubstituted or Ra-substituted C2-C5 alkenyl group, an unsubstituted or Ra-substituted C2-C5 alkynyl group;
the substituent Ra of each group is independently selected from halogen, a C1-C5 aldehyde group, a C2-C5 carbonyl group, a C2-C5 ester group, a sulfonic acid group, an amino group, a C2-C5 amide group, and a cyano group; and
Based on the mass of the electrolyte, the compound of formula (I) has a mass percentage of A3%, wherein 0.01<A3<5. By controlling the inclusion of the compound of formula (I) in the electrolyte, the type of the compound of formula (I), and the percentage of the compound of formula (I) within the range of this application, a more stable positive electrode electrolyte interface film can be formed on the surface of the positive electrode material layer. The positive electrode electrolyte interface film contains organic polymer components, which can further improve the contact between the positive electrode material layer and the separator, facilitating lithium-ion transport, and enhance the cycle life of the secondary battery.

In one embodiment of this application, the compound of formula (I) is at least one selected from the following compounds:

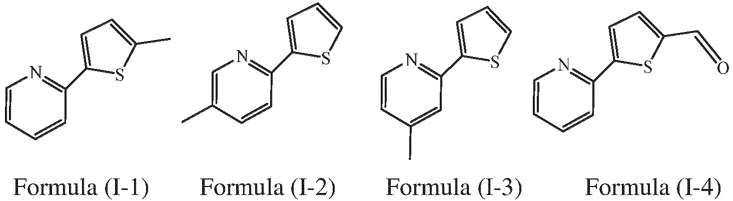

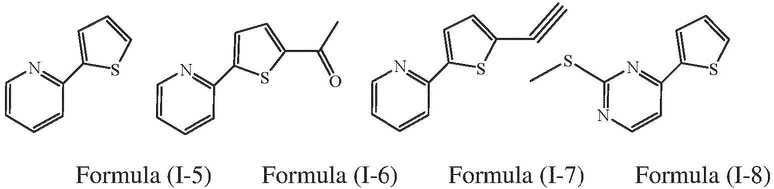

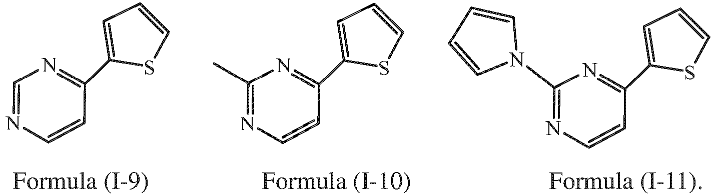

By selecting the above compound of formula (I), a positive electrode electrolyte interface film with good ion diffusion and stability can be formed on the surface of the positive electrode active material, and the positive electrode electrolyte interface film contains organic polymer components, which can further improve the contact between the positive electrode material layer and the separator, facilitating lithium-ion transport and enhancing the cycle life of the secondary battery.

According to a second aspect of this application, an electronic apparatus is provided, including the secondary battery according to any one of the embodiments described above. Therefore, the electronic apparatus provided by this application has good performance.

### Beneficial effects of this application:

This application provides a secondary battery and an electronic apparatus. The secondary battery includes an electrode assembly, a tab, an electrolyte, and one or more adhesive components. Along a thickness direction of the electrode assembly, the electrode assembly includes first surface and second surface disposed opposite to each other. The first surface and the second surface are surfaces formed by length direction and width direction of the electrode assembly, and the adhesive component extends from the first surface to the second surface. A mass of the electrolyte is m g, a capacity of the secondary battery is C Ah, an electrolyte retention of the secondary battery is Q g/Ah, and an area of the one or more adhesive components is S mm², where Q=m/C, 80≤S/Q≤2500, and 0.6≤Q≤2.7. The energy density and cycle life of the secondary battery provided in this application are significantly improved.

Certainly, it is not necessary for any product or method implementing this application to simultaneously achieve all the advantages described above.

### BRIEF DESCRIPTION OF THE DRAWINGS

To further illustrate the technical solutions of the embodiments or the prior art in this application, the accompanying drawings will be briefly described below. It is obvious that the following description of the drawings is only some embodiments of this application, and for those skilled in the art, other embodiments can be obtained based on these drawings.
FIG. 1 is a schematic diagram of the structure of an electrode assembly, a tab, and an adhesive component according to one embodiment of this application;
FIG. 2 is a schematic diagram of the structure of an electrode assembly, a tab, and an adhesive component according to another embodiment of this application;
FIG. 3 is a schematic diagram of the structure of an electrode assembly, a tab, and an adhesive component according to yet another embodiment of this application;
FIG. 4 is a schematic diagram of the structure of an electrode assembly, a tab, and an adhesive component according to yet another embodiment of this application;
FIG. 5 is a schematic diagram of the structure of an electrode assembly, a tab, and an adhesive component according to yet another embodiment of this application;
FIG. 6 is a schematic diagram of the structure of an electrode assembly, a tab, and an adhesive component according to yet another embodiment of this application;
FIG. 7 is a schematic diagram of the structure of an electrode assembly, a tab, and an adhesive component according to yet another embodiment of this application;
FIG. 8 is a schematic diagram of the structure of an electrode assembly, a tab, and an adhesive component according to yet another embodiment of this application;
FIG. 9 is a schematic diagram of the structure of an electrode assembly, a tab, and an adhesive component according to yet another embodiment of this application;
FIG. 10 is a schematic diagram of the structure of an electrode assembly, a tab, and an adhesive component according to yet another embodiment of this application;
FIG. 11 is a schematic diagram of the structure of an electrode assembly, a tab, and an adhesive component according to yet another embodiment of this application;
FIG. 12 is a schematic diagram of the structure of an electrode assembly, a tab, and an adhesive component according to yet another embodiment of this application;
FIG. 13 is a schematic diagram of the structure of an electrode assembly, a tab, and an adhesive component according to yet another embodiment of this application; and
FIG. 14 is a schematic diagram of the structure of an electrode assembly, a tab, and an adhesive component according to yet another embodiment of this application.

### DESCRIPTION OF EMBODIMENTS

The following description provides a clear and complete explanation of the technical solutions in the embodiments of this application, with reference to the accompanying drawings. It should be noted that the described embodiments are only some but not all of embodiments of this application. All other embodiments obtained by those skilled in the art based on this application are within the scope of protection of this application.

It should be noted that the term "lithium-ion battery" is used as an example of the secondary battery in the following to explain the embodiments of this application, but the secondary battery in this application is not limited to lithium-ion batteries. Specific technical solutions are as follows:

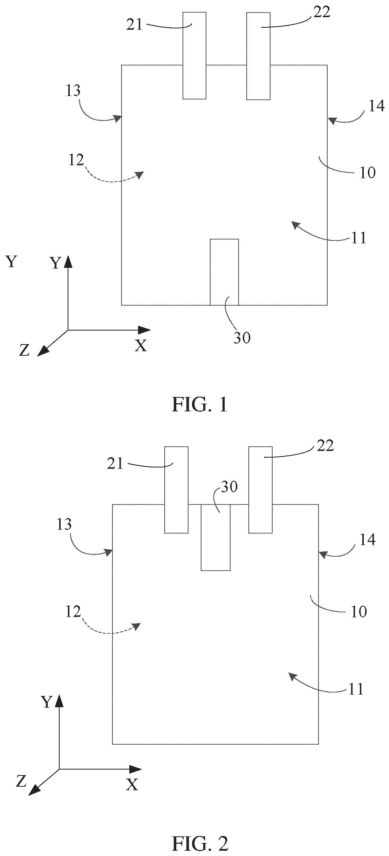

This application provides a secondary battery including an electrode assembly, a tab, an electrolyte, and one or more adhesive components. Along a thickness direction of the electrode assembly, the electrode assembly includes first surface and second surface disposed opposite to each other. The first surface and the second surface are surfaces formed by length direction and width direction of the electrode assembly, and the adhesive component extends from the first surface to the second surface. For ease of understanding, a three-dimensional Cartesian coordinate system is established with the width direction of the electrode assembly as the X direction, the length direction of the electrode assembly as the Y direction, and the thickness direction of the electrode assembly as the Z direction. As shown in FIG. 1, tabs include a positive tab 21 and a negative tab 22. Along the thickness direction of the electrode assembly 10, for example, the Z direction, the electrode assembly 10 includes opposing first surface 11 and second surface 12. The first surface 11 is a surface formed by the length direction (Y direction) and width direction (X direction) of the electrode assembly 10. The electrode assembly 10 further includes four side surfaces. Two side surfaces are formed by the width direction (X direction) and thickness direction (Z direction) of the electrode assembly 10. The side surface closer to the positive tab 21 and the negative tab 22 is referred to as the first side surface (not snot shown in the figure.), and the side surface farther from the positive tab 21 and the negative tab 22 is referred to as the second side surface (not snot shown in the figure.). The other two side surfaces are formed by the length direction (Y direction) and thickness direction (Z direction) of the electrode assembly 10. The side surface closer to the positive tab 21 is referred to as the third side surface (not snot shown in the figure.), and the side surface closer to the negative tab 22 is referred to as the fourth side surface (not snot shown in the figure.). As shown in FIG. 1, the adhesive component 30 extends from the first surface 11 to the second surface 12, passing through one side surface. The side surface is formed by the width direction (X direction) and thickness direction (Z direction) of the electrode assembly 10. In this application, the electrode assembly includes a positive electrode plate, a separator, and a negative electrode plate, and the separator is located between the positive electrode plate and the negative electrode plate to provide isolation. The positive electrode plate includes a positive current collector and a positive electrode material layer disposed on at least one surface of the positive current collector, and the negative electrode plate includes a negative current collector and a negative electrode material layer disposed on at least one surface of the negative current collector.

A mass of the electrolyte is m g, a capacity of the secondary battery is C Ah, an electrolyte retention of the secondary battery is Q g/Ah, and an area of the one or more adhesive components is S mm², wherein Q=m/C, 80≤S/Q≤2500, preferably 400≤S/Q≤2000, for example, S/Q can be 80, 100, 200, 400, 600, 800, 1000, 1200, 1400, 1600, 1800, 2000, 2200, 2400, 2500, or in a range defined by any two of these values; and 0.6 ≤ Q ≤ 2.7, for example, Q can be 0.6, 0.7, 0.8, 0.9, 1, 1.2, 1.4, 1.6, 1.8, 2, 2.2, 2.4, 2.6, 2.7, or in a range defined by any two of these values.

The inventors have found that when there is a large amount of electrolyte in the secondary battery, the free electrolyte tends to accumulate at both ends of the secondary battery, and the free electrolyte can soak the separator, resulting in poor adhesion between the separator and the positive electrode material layer, as well as between the separator and the negative electrode material layer. By increasing the number of adhesive components on the first and second surfaces of the electrode assembly, the contact between the separator and the positive electrode material layer and between the separator and the negative electrode material layer can be improved. However, this may affect the weight energy density and volumetric energy density of the secondary battery. Therefore, by controlling the inclusion of one or more adhesive components in the secondary battery, the position of the adhesive component, the ratio of the area of the adhesive component to the electrolyte retention range, and the value of the electrolyte retention range within the range of this application, the adhesion between the separator and the positive electrode material, as well as between the separator and the negative electrode material can be improved, thereby enhancing the cycle life of the secondary battery while maintaining its energy density.

In one embodiment of this application, 50≤S≤2500. For example, S can be 50, 100, 200, 400, 600, 800, 1000, 1200, 1400, 1600, 1800, 2000, 2200, 2400, 2500, or in a range defined by any two of these values. By controlling the value of S within the range of this application, the adhesive component has an appropriate total area, which further improves the cycle life of the secondary battery while maintaining its energy density.

In one embodiment of this application, 0.2≤m≤15, for example, m can be 0.2, 0.4, 0.6, 0.8, 1, 2, 3, 4, 5, 6, 7, 8, 9, 10, 11, 12, 13, 14, 15, or in a range defined by any two of these values; and 0.3≤C≤8, for example, C can be 0.3, 0.4, 0.5, 0.6, 0.7, 0.8, 0.9, 1, 2, 3, 4, 5, 6, 7, 8, or in a range defined by any two of these values. By controlling the values of m and C within the range of this application, the mass of the electrolyte of the secondary battery, the capacity of the secondary battery, and the total area of the adhesive component can be matched, resulting in a secondary battery with high energy density and long cycle life.

In one embodiment of this application, an area of each of the one and more adhesive components is S1 mm², wherein 50≤S1≤810. For example, S1 can be 50, 70, 90, 100, 200, 300, 400, 500, 600, 700, 800, 810, or in a range defined by any two of these values. The one or more adhesive components has N adhesive components, wherein 1≤N≤10, and N is a positive integer. For example, N can be 1, 2, 3, 4, 5, 6, 7, 8, 9, or 10. Any adhesive component is disposed on the first surface, the second surface, and at least one side surface, where the side surface is formed by the length direction and thickness direction of the electrode assembly, or the side surface is formed by the width direction and thickness direction of the electrode assembly. By controlling the values of S 1 and N, as well as the positions of the adhesive components within the range of this application, each adhesive component has an appropriate area, and the secondary battery has a suitable number of adhesive components. This ensures that, while maintaining the energy density of the secondary battery, the separator can bond well with both the positive electrode material and the negative electrode material. At the same time, it can effectively ensure the transmission and infiltration of the electrolyte, thereby further improving the cycle life of the secondary battery.

In one embodiment of this application, N=1, and the adhesive component is disposed on the first surface, the second surface, and at least one side surface. In one embodiment of this application, N=1, and the adhesive component is disposed on the first surface, the second surface, and one side surface. As shown in FIG. 1, N=1, and the adhesive component 30 extends from the first surface 11, passing through one side surface, to the second surface 12. The side surface is the second side surface formed by the width direction (X direction) and thickness direction (Z direction) of the electrode assembly 10. Along the X direction, the electrode assembly 10 includes opposing first edge 13 and second edge 14. The distance between the adhesive component 30 and the first edge 13 is not specifically limited in this application, as long as the purpose of this application can be achieved. In one embodiment of this application, as shown in FIG. 2, N=1, and the adhesive component 30 extends from the first surface 11, passing through one side surface, to the second surface 12. The side surface is formed by the width direction (X direction) and thickness direction (Z direction) of the electrode assembly 10. The distance between the adhesive component 30 and the first edge 13 is not specifically limited in this application, as long as the purpose of this application can be achieved.

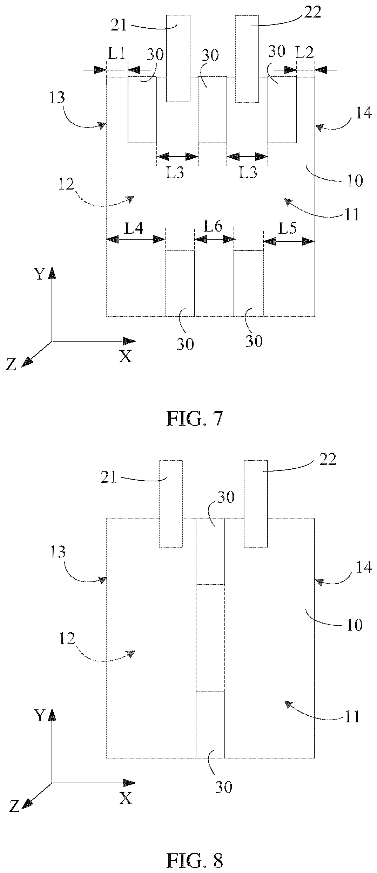

In one embodiment of this application, N=1, and the adhesive component is disposed on the first surface, the second surface, and two side surfaces. In one embodiment of this application, as shown in FIG. 8, N=1, and the adhesive component 30 extends from the first surface 11, passing through one side surface, to the second surface 12 and then extends through another side surface to the first surface 11. The side surface is formed by the width direction (X direction) and thickness direction (Z direction) of the electrode assembly 10. The distance between the adhesive component 30 and the first edge 13 is not specifically limited in this application, as long as the purpose of this application can be achieved.

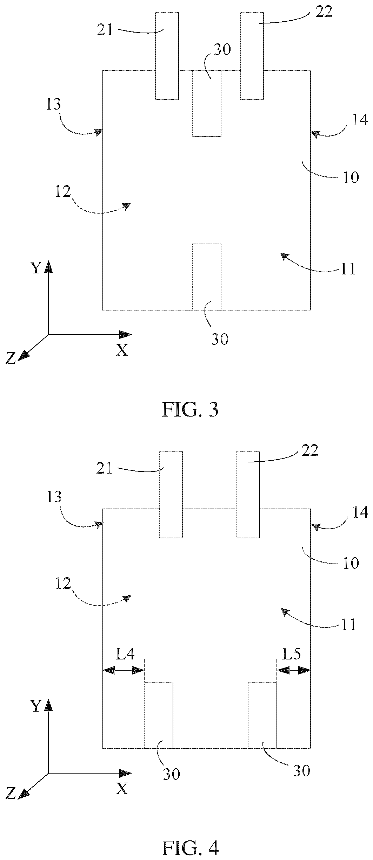

In one embodiment of this application, N=2, and the adhesive components are disposed on the first surface, the second surface, and at least one side surface. In one embodiment of this application, as shown in FIG. 3, N=2, and one of the adhesive components 30 extends from the first surface 11, passing through one side surface, to the second surface 12. The side surface is the first side surface formed by the width direction (X direction) and thickness direction (Z direction) of the electrode assembly 10. The other adhesive component 30 extends from the first surface 11, passing through one side surface, to the second surface 12. The side surface is the second side surface formed by the width direction (X direction) and thickness direction (Z direction) of the electrode assembly 10. The distance between the adhesive component 30 and the first edge 13 is not specifically limited in this application, as long as the purpose of this application can be achieved. In one embodiment of this application, as shown in FIG. 4, N=2, and one adhesive component 30 extends from the first surface 11, passing through one side surface, to the second surface 12. The side surface is the second side surface formed by the width direction (X direction) and thickness direction (Z direction) of the electrode assembly 10. The other adhesive component 30 extends from the first surface 11, passing through one side surface, to the second surface 12. The side surface is the second side surface formed by the width direction (X direction) and thickness direction (Z direction) of the electrode assembly 10. The two adhesive components pass through the same side surface. The distance between the adhesive component 30 closer to the first edge 13 and the first edge 13, denoted as L4, is not specifically limited in this application, as long as the purpose of this application can be achieved. The distance between the adhesive component 30 closer to the second edge 14 and the second edge 14, denoted as L5, is not specifically limited in this application, as long as the purpose of this application can be achieved.

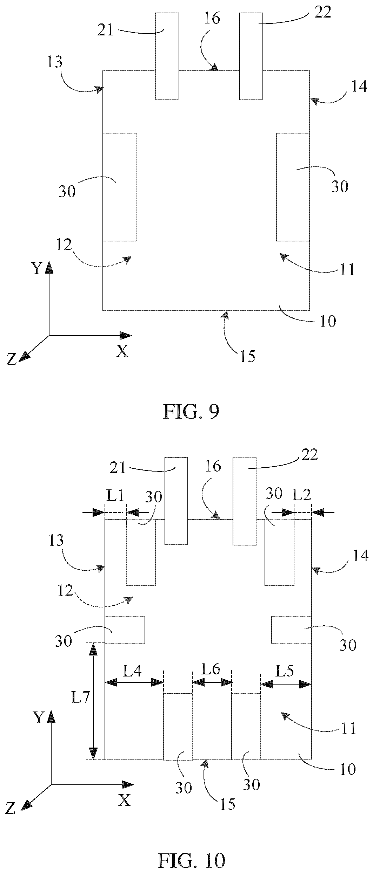

In one embodiment of this application, as shown in FIG. 9, N=2, and one of the adhesive components 30 extends from the first surface 11, passing through one side surface, to the second surface 12. The side surface is the third side surface formed by the length direction (Y direction) and thickness direction (Z direction) of the electrode assembly 10. The other adhesive component 30 extends from the first surface 11, passing through one side surface, to the second surface 12. The side surface is the fourth side surface formed by the length direction (Y direction) and thickness direction (Z direction) of the electrode assembly 10. Along the Y direction, the electrode assembly 10 includes opposing third edge 15 and fourth edge 16. The distance between the adhesive component 30 and the third edge 15 is not specifically limited in this application, as long as the purpose of this application can be achieved.

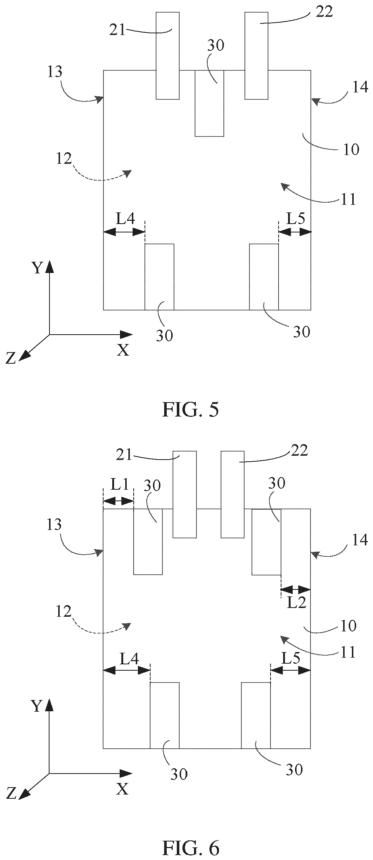

In one embodiment of this application, N=3, and the adhesive components are disposed on the first surface, the second surface, and at least one side surface. In one embodiment of this application, as shown in FIG. 5, N=3, and one of the adhesive components 30 extends from the first surface 11, passing through one side surface, to the second surface 12. The side surface is the first side surface formed by the width direction (X direction) and thickness direction (Z direction) of the electrode assembly 10. The distance between the adhesive component 30 and the first edge 13 is not specifically limited in this application, as long as the purpose of this application can be achieved. The other two adhesive components 30 extend from the first surface 11, passing through one side surface, to the second surface 12. The side surface is the second side surface formed by the width direction (X direction) and thickness direction (Z direction) of the electrode assembly 10. The two adhesive components pass through the same side surface. For the two adhesive components that pass through the second side surface, the distance between the adhesive component closer to the first edge 13 and the first edge 13, denoted as L4, is not specifically limited in this application, as long as the purpose of this application can be achieved. The distance between the adhesive component closer to the second edge 14 and the second edge 14, denoted as L5, is not specifically limited in this application, as long as the purpose of this application can be achieved.

In one embodiment of this application, N=4, and the adhesive components are disposed on the first surface, the second surface, and at least one side surface. In one embodiment of this application, as shown in FIG. 6, N=4, and two of the adhesive components 30 extend from the first surface 11, passing through one side surface, to the second surface 12. The side surface is the first side surface formed by the width direction (X direction) and thickness direction (Z direction) of the electrode assembly 10. The two adhesive components pass through the same side surface. For the two adhesive components that pass through the first side surface, the distance between the adhesive component closer to the first edge 13 and the first edge 13, denoted as L1, is not specifically limited in this application, as long as the purpose of this application can be achieved. The distance between the adhesive component closer to the second edge 14 and the second edge 14, denoted as L2, is not specifically limited in this application, as long as the purpose of this application can be achieved. The other two adhesive components 30 extend from the first surface 11, passing through one side surface, to the second surface 12. The side surface is the second side surface formed by the width direction (X direction) and thickness direction (Z direction) of the electrode assembly 10. The two adhesive components pass through the same side surface. For the two adhesive components that pass through the second side surface, the distance between the adhesive component closer to the first edge 13 and the first edge 13, denoted as L4, is not specifically limited in this application, as long as the purpose of this application can be achieved. The distance between the adhesive component closer to the second edge 14 and the second edge 14, denoted as L5, is not specifically limited in this application, as long as the purpose of this application can be achieved.

In one embodiment of this application, N=5, and the adhesive components are disposed on the first surface, the second surface, and at least one side surface. In one embodiment of this application, as shown in FIG. 7, N=5, and three of the adhesive components 30 extend from the first surface 11, passing through one side surface, to the second surface 12. The side surface is the first side surface formed by the width direction (X direction) and thickness direction (Z direction) of the electrode assembly 10. The three adhesive components pass through the same side surface. For the three adhesive components that pass through the first side surface, the distance between the adhesive component closer to the first edge 13 and the first edge 13, denoted as L1, is not specifically limited in this application, as long as the purpose of this application can be achieved. The distance between the adhesive component closer to the second edge 14 and the second edge 14, denoted as L2, is not specifically limited in this application, as long as the purpose of this application can be achieved. The distance between adjacent adhesive components, denoted as L3, is not specifically limited in this application, as long as the purpose of this application can be achieved. The other two adhesive components 30 extend from the first surface 11, passing through one side surface, to the second surface 12. The side surface is the second side surface formed by the width direction (X direction) and thickness direction (Z direction) of the electrode assembly 10. The two adhesive components pass through the same side surface. For the two adhesive components that pass through the second side surface, the distance between the adhesive component closer to the first edge 13 and the first edge 13, denoted as L4, is not specifically limited in this application, as long as the purpose of this application can be achieved. The distance between the adhesive component closer to the second edge 14 and the second edge 14, denoted as L5, is not specifically limited in this application, as long as the purpose of this application can be achieved. The distance between the two adhesive components, denoted as L6, is not specifically limited in this application, as long as the purpose of this application can be achieved.

In one embodiment of this application, N=6, and the adhesive components are disposed on the first surface, the second surface, and at least one side surface. In one embodiment of this application, as shown in FIG. 10, N=6, and two of the adhesive components 30 extend from the first surface 11, passing through one side surface, to the second surface 12. The side surface is the first side surface formed by the width direction (X direction) and thickness direction (Z direction) of the electrode assembly 10. The two adhesive components pass through the same side surface. For the two adhesive components that pass through the first side surface, the distance between the adhesive component closer to the first edge 13 and the first edge 13, denoted as L1, is not specifically limited in this application, as long as the purpose of this application can be achieved. The distance between the adhesive component closer to the second edge 14 and the second edge 14, denoted as L2, is not specifically limited in this application, as long as the purpose of this application can be achieved. Two other adhesive components 30 extend from the first surface 11, passing through one side surface, to the second surface 12. The side surface is the second side surface formed by the width direction (X direction) and thickness direction (Z direction) of the electrode assembly 10. The two adhesive components pass through the same side surface. For the two adhesive components that pass through the second side surface, the distance between the adhesive component closer to the first edge 13 and the first edge 13, denoted as L4, is not specifically limited in this application, as long as the purpose of this application can be achieved. The distance between the adhesive component closer to the second edge 14 and the second edge 14, denoted as L5, is not specifically limited in this application, as long as the purpose of this application can be achieved. The distance between the two adhesive components, denoted as L6, is not specifically limited in this application, as long as the purpose of this application can be achieved. Another adhesive component 30 extends from the first surface 11, passing through one side surface, to the second surface 12. The side surface is the third surface formed by the length direction (Y direction) and thickness direction (Z direction) of the electrode assembly 10. The rest one adhesive component 30 extends from the first surface 11, passing through one side surface, to the second surface 12. The side surface is the fourth side surface formed by the length direction (Y direction) and thickness direction (Z direction) of the electrode assembly 10. The distance between the adhesive component 30 and the third edge 15, denoted as L7, is not specifically limited in this application, as long as the purpose of this application can be achieved.

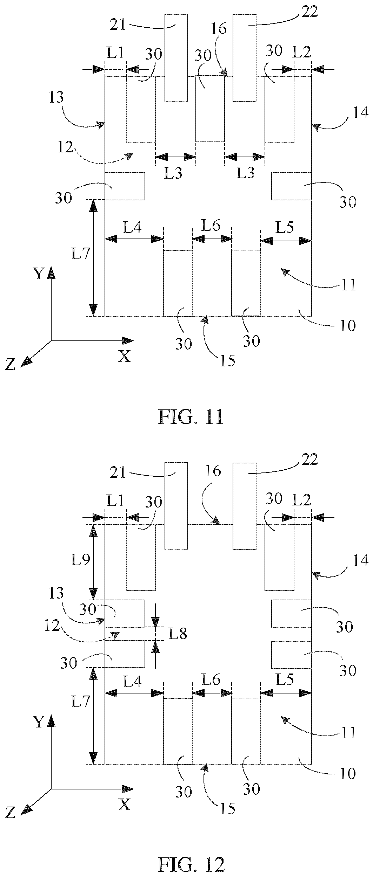

In one embodiment of this application, N=7, and the adhesive components are disposed on the first surface, the second surface, and at least one side surface. In one embodiment of this application, as shown in FIG. 11, N=7, and three of the adhesive components 30 extend from the first surface 11, passing through one side surface, to the second surface 12. The side surface is the first side surface formed by the width direction (X direction) and thickness direction (Z direction) of the electrode assembly 10. The three adhesive components pass through the same side surface. For the three adhesive components that pass through the first side surface, the distance between the adhesive component closer to the first edge 13 and the first edge 13, denoted as L1, is not specifically limited in this application, as long as the purpose of this application can be achieved. The distance between the adhesive component closer to the second edge 14 and the second edge 14, denoted as L2, is not specifically limited in this application, as long as the purpose of this application can be achieved. The distance between adjacent adhesive components, denoted as L3, is not specifically limited in this application, as long as the purpose of this application can be achieved. Two other adhesive components 30 extend from the first surface 11, passing through one side surface, to the second surface 12. The side surface is the second side surface formed by the width direction (X direction) and thickness direction (Z direction) of the electrode assembly 10. The two adhesive components pass through the same side surface. For the two adhesive components that pass through the second side surface, the distance between the adhesive component closer to the first edge 13 and the first edge 13, denoted as L4, is not specifically limited in this application, as long as the purpose of this application can be achieved. The distance between the adhesive component closer to the second edge 14 and the second edge 14, denoted as L5, is not specifically limited in this application, as long as the purpose of this application can be achieved. The distance between the two adhesive components, denoted as L6, is not specifically limited in this application, as long as the purpose of this application can be achieved. Another adhesive component 30 extends from the first surface 11, passing through one side surface, to the second surface 12. The side surface is the third side surface formed by the length direction (Y direction) and thickness direction (Z direction) of the electrode assembly 10. The rest one adhesive component 30 extends from the first surface 11, passing through one side surface, to the second surface 12. The side surface is the fourth side surface formed by the length direction (Y direction) and thickness direction (Z direction) of the electrode assembly 10. The distance between the adhesive component 30 and the third edge 15, denoted as L7, is not specifically limited in this application, as long as the purpose of this application can be achieved.

In one embodiment of this application, N=8, and the adhesive components are disposed on the first surface, the second surface, and at least one side surface. In one embodiment of this application, as shown in FIG. 12, N=8, and two of the adhesive components 30 extend from the first surface 11, passing through one side surface, to the second surface 12. The side surface is the first side surface formed by the width direction (X direction) and thickness direction (Z direction) of the electrode assembly 10. The two adhesive components pass through the same side surface. For the two adhesive components that pass through the first side surface, the distance between the adhesive component closer to the first edge 13 and the first edge 13, denoted as L1, is not specifically limited in this application, as long as the purpose of this application can be achieved. The distance between the adhesive component closer to the second edge 14 and the second edge 14, denoted as L2, is not specifically limited in this application, as long as the purpose of this application can be achieved. Two other adhesive components 30 extend from the first surface 11, passing through one side surface, to the second surface 12. The side surface is the second side surface formed by the width direction (X direction) and thickness direction (Z direction) of the electrode assembly 10. The two adhesive components pass through the same side surface. For the two adhesive components that pass through the second side surface, the distance between the adhesive component closer to the first edge 13 and the first edge 13, denoted as L4, is not specifically limited in this application, as long as the purpose of this application can be achieved. The distance between the adhesive component closer to the second edge 14 and the second edge 14, denoted as L5, is not specifically limited in this application, as long as the purpose of this application can be achieved. The distance between the two adhesive components, denoted as L6, is not specifically limited in this application, as long as the purpose of this application can be achieved. Two other adhesive components 30 extend from the first surface 11, passing through one side surface, to the second surface 12. The side surface is the third side surface formed by the length direction (Y direction) and thickness direction (Z direction) of the electrode assembly 10. The two adhesive components pass through the same side surface. The rest two adhesive components 30 extend from the first surface 11, passing through one side surface, to the second surface 12. The side surface is the fourth side surface formed by the length direction (Y direction) and thickness direction (Z direction) of the electrode assembly 10. The two adhesive components pass through the same side surface. For the two adhesive components that pass through the third side surface, the distance between the adhesive component closer to the third edge 15 and the third edge 15, denoted as L7, is not specifically limited in this application, as long as the purpose of this application can be achieved. Similarly, the distance between the two adhesive components 30, denoted as L8, is not specifically limited in this application, as long as the purpose of this application can be achieved. Additionally, the distance between the adhesive component 30 closer to the fourth edge 16 and the fourth edge 16, denoted as L9, is not specifically limited in this application, as long as the purpose of this application can be achieved.

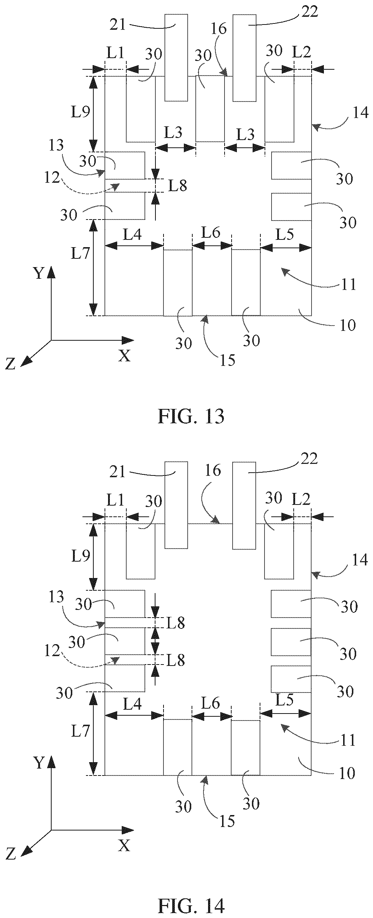

In one embodiment of this application, N=9, and the adhesive components are disposed on the first surface, the second surface, and at least one side surface. In one embodiment of this application, as shown in FIG. 13, N=9, and three of the adhesive components 30 extend from the first surface 11, passing through one side surface, to the second surface 12. The side surface is the first side surface formed by the width direction (X direction) and thickness direction (Z direction) of the electrode assembly 10. The two adhesive components pass through the same side surface. For the three adhesive components that pass through the first side surface, the distance between the adhesive component closer to the first edge 13 and the first edge 13, denoted as L1, is not specifically limited in this application, as long as the purpose of this application can be achieved. The distance between the adhesive component closer to the second edge 14 and the second edge 14, denoted as L2, is not specifically limited in this application, as long as the purpose of this application can be achieved. The distance between two adjacent adhesive components 30, denoted as L3, is not specifically limited in this application, as long as the purpose of this application can be achieved. Two other adhesive components 30 extend from the first surface 11, passing through one side surface, to the second surface 12. The side surface is the second side surface formed by the width direction (X direction) and thickness direction (Z direction) of the electrode assembly 10. The two adhesive components pass through the same side surface. For the two adhesive components that pass through the second side surface, the distance between the adhesive component closer to the first edge 13 and the first edge 13, denoted as L4, is not specifically limited in this application, as long as the purpose of this application can be achieved. The distance between the adhesive component closer to the second edge 14 and the second edge 14, denoted as L5, is not specifically limited in this application, as long as the purpose of this application can be achieved. The distance between the two adhesive components, denoted as L6, is not specifically limited in this application, as long as the purpose of this application can be achieved. Two other adhesive components 30 extend from the first surface 11, passing through one side surface, to the second surface 12. The side surface is the third side surface formed by the length direction (Y direction) and thickness direction (Z direction) of the electrode assembly 10. The two adhesive components pass through the same side surface. The rest two adhesive components 30 extend from the first surface 11, passing through one side surface, to the second surface 12. The side surface is the fourth side surface formed by the length direction (Y direction) and thickness direction (Z direction) of the electrode assembly 10. The two adhesive components pass through the same side surface. For the two adhesive components that pass through the third side surface, the distance between the adhesive component closer to the third edge 15 and the third edge 15, denoted as L7, is not specifically limited in this application, as long as the purpose of this application can be achieved. The distance between adjacent adhesive components, denoted as L8, is not specifically limited in this application, as long as the purpose of this application can be achieved. The distance between the adhesive component 30 closer to the fourth edge 16 and the fourth edge 16, denoted as L9, is not specifically limited in this application, as long as the purpose of this application can be achieved.

In one embodiment of this application, N=10, and the adhesive components are disposed on the first surface, the second surface, and at least one side surface. In one embodiment of this application, as shown in FIG. 14, N=10, and two of the adhesive components 30 extend from the first surface 11, passing through one side surface, to the second surface 12. The side surface is formed the first side surface by the width direction (X direction) and thickness direction (Z direction) of the electrode assembly 10. The two adhesive components pass through the same side surface. For the two adhesive components that pass through the first side surface, the distance between the adhesive component closer to the first edge 13 and the first edge 13, denoted as L1, is not specifically limited in this application, as long as the purpose of this application can be achieved. The distance between the adhesive component closer to the second edge 14 and the second edge 14, denoted as L2, is not specifically limited in this application, as long as the purpose of this application can be achieved. Two other adhesive components 30 extend from the first surface 11, passing through one side surface, to the second surface 12. The side surface is the second side surface formed by the width direction (X direction) and thickness direction (Z direction) of the electrode assembly 10. The two adhesive components pass through the same side surface. For the two adhesive components that pass through the second side surface, the distance between the adhesive component closer to the first edge 13 and the first edge 13, denoted as L4, is not specifically limited in this application, as long as the purpose of this application can be achieved. The distance between the adhesive component closer to the second edge 14 and the second edge 14, denoted as L5, is not specifically limited in this application, as long as the purpose of this application can be achieved. The distance between the two adhesive components, denoted as L6, is not specifically limited in this application, as long as the purpose of this application can be achieved. Three other adhesive components 30 extend from the first surface 11, passing through one side surface, to the second surface 12. The side surface is the third side surface formed by the length direction (Y direction) and thickness direction (Z direction) of the electrode assembly 10. The three adhesive components pass through the same side surface. The rest three adhesive components 30 extend from the first surface 11, passing through one side surface, to the second surface 12. The side surface is the fourth side surface formed by the length direction (Y direction) and thickness direction (Z direction) of the electrode assembly 10. The three adhesive components pass through the same side surface. For the three adhesive components that pass through the third side surface, the distance between the adhesive component closer to the third edge 15 and the third edge 15, denoted as L7, is not specifically limited in this application, as long as the purpose of this application can be achieved. The distance between adjacent adhesive components, denoted as L8, is not specifically limited in this application, as long as the purpose of this application can be achieved. The distance between the adhesive component closer to the fourth edge 16 and the fourth edge 16, denoted as L9, is not specifically limited in this application, as long as the purpose of this application can be achieved.

Generally, the electrode assembly can be a wound structure or a stacked structure. In this application, when the electrode assembly is a wound structure, the adhesive components can be disposed on the first side surface and/or the second side surface. When the electrode assembly is a wound structure, disposing the adhesive components as described above can improve the adhesion between the separator and the positive electrode material, as well as between the separator and the negative electrode material, thereby improving the cycle life of the secondary battery. When the electrode assembly is a stacked structure, the adhesive components can be disposed on the first side surface and the second side surface, or on the third side surface and the fourth side surface, or on the first side surface, the second side surface, the third side surface, and the fourth side surface. When the electrode assembly is a stacked structure, disposing the adhesive components as described above can improve the adhesion between the separator and the positive electrode material, as well as between the separator and the negative electrode material, thereby improving the cycle life of the secondary battery.

In one embodiment of this application, the thickness of each of the one or more adhesive components is D µm, wherein 10≤D≤30, preferably, 15≤D≤25. For example, D can be 10, 12, 14, 15, 16, 18, 20, 22, 24, 25, 26, 28, 30, or in a range defined by any two of these values. By controlling the value of D within the range of this application, the adhesive component has an appropriate thickness, which enables the secondary battery to have a higher volumetric energy density while considering its weight energy density. It can also ensure the mechanical strength of the adhesive components, allowing them to have good adhesion and further improving the cycle life of the secondary battery.

In this application, the width W of a single adhesive component is from 5mm to 36mm, and the length L of a single adhesive component is from 10mm to 40.5mm. The product of the width W and the length L of a single adhesive component is the area S1 of a single adhesive component in mm². S1 satisfies the condition: 50≤S1≤810. This application does not have any specific limitation on the type of adhesive components, as long as the purpose of this application can be achieved. For example, the adhesive components can be green adhesive or blue adhesive. In this application, the number of adhesive components is greater than one, and there are no specific limitations on the relative positions of each adhesive component as long as the purpose of this application is achieved. In this application, when the adhesive components are disposed on the first side surface and/or the second side surface, the dimension of a single adhesive component along the X direction is the width W of the adhesive component, and the dimension of a single adhesive component along the Y direction is the length L of the adhesive component. When the adhesive components are disposed on the third side surface and/or the fourth side surface, the dimension of a single adhesive component along the Y direction is the width W of the adhesive component, and the dimension of a single adhesive component along the X direction is the length L of the adhesive component.

In one embodiment of this application, the electrolyte includes a linear ester, and the linear ester includes at least one selected from the group consisting of linear carbonate ester and linear carboxylic ester. The linear carbonate ester includes at least one selected from the group consisting of dimethyl carbonate, methyl ethyl carbonate, diethyl carbonate, methyl propyl carbonate, dioctyl carbonate, dipentyl carbonate, ethyl isobutyl carbonate, isopropyl methyl carbonate, di-n-butyl carbonate, di-isopropyl carbonate, and dipropyl carbonate. The linear carboxylic ester includes at least one selected from the group consisting of ethyl acetate, propyl acetate, butyl acetate, ethyl propionate, propyl propionate, butyl butyrate, methyl butyrate, methyl isovalerate, propyl hexanoate, and isobutyl acetate. Based on the mass of the electrolyte, the linear ester has a mass percentage of A1%, wherein 0.03≤A1/S1≤1.2. For example, A1/S1 can be 0.03, 0.05, 0.07, 0.09, 0.1, 0.3, 0.5, 0.7, 0.9, 1, 1.1, 1.2, or in a range defined by any two of these values. The mass percentage of linear esters in the electrolyte can affect the swelling and dissolution of the bonding layer polymer of the adhesive component, thereby influencing the bonding effect of the adhesive component. By controlling the inclusion of the linear ester in the electrolyte, the type of linear ester, and the value of A1/S1 within the range of this application, the swelling and dissolution of the bonding layer polymer of the adhesive component can be moderate, resulting in better adhesion of the adhesive component and further improving the cycle life of the secondary battery.

In one embodiment of this application, 20≤A1≤70. For example, A1 can be 20, 22, 25, 27, 30, 32, 35, 37, 40, 42, 45, 47, 50, 52, 55, 57, 60, 62, 65, 67, 70, or in a range defined by any two of these values. By controlling the value of A1 within the range of this application, the electrolyte has an appropriate viscosity and can effectively dissociate lithium salt, thereby further improving the cycle life of the secondary battery.

In one embodiment of this application, the electrolyte includes ethyl 2,2-difluoroacetate, and based on the mass of the electrolyte, the ethyl 2,2-difluoroacetate has a mass percentage of A6%, wherein 2≤A6≤20. For example, A6 can be 2, 4, 6, 8, 10, 12, 14, 16, 18, 20, or in a range defined by any two of these values. By controlling the inclusion of ethyl 2,2-difluoroacetate in the electrolyte and the percentage of ethyl 2,2-difluoroacetate within the range of this application, the swelling of the bonding layer polymer of the adhesive component can be moderate, resulting in better adhesion of the adhesive component and further improving the cycle life of the secondary battery.

In one embodiment of this application, the electrolyte further includes a sulfur-oxygen double bond compound, and the sulfur-oxygen double bond compound includes at least one selected from the group consisting of 1,3-propane sultone, vinyl sulfate, propylene sultone, 3-fluoro-1,3-propane sultone, 1,2-propane sultone, 1,4-butane sultone, 2,4-butane sultone, and

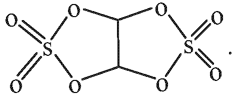

Based on the mass of the electrolyte, the sulfur-oxygen double bond compound has a mass percentage of A2%, wherein 0.3≤A2≤4.8. For example, A2 can be 0.3, 0.5, 0.7, 0.9, 1, 1.3, 1.5, 1.7, 1.9, 2, 2.3, 2.5, 2.7, 2.9, 3, 3.3, 3.5, 3.7, 3.9, 4, 4.3, 4.5, 4.7, 4.8, or in a range defined by any two of these values. By controlling the inclusion of sulfur-oxygen double bond compounds, the type of sulfur-oxygen double bond compounds, and the percentage of sulfur-oxygen double bond compounds within the range of this application, a more stable solid electrolyte interface can be formed on the surface of the negative electrode material layer. The SEI contains organic polymer components, which can further improve the contact between the negative electrode material layer and the separator, thereby enhancing the cycle life of the secondary battery.

In one embodiment of this application, 0.3≤A2×Q≤11. For example, A2×Q can be 0.3, 0.5, 0.7, 0.9, 1, 2, 3, 4, 5, 6, 7, 8, 9, 10, 11, or in a range defined by any two of these values. By controlling the value of A2×Q within the range of this application, the mass percentage of the sulfur-oxygen double bond compounds can match the capacity of the secondary battery and the mass of the electrolyte, thereby achieving a higher cycle life of the secondary battery with a lower electrolyte retention range.

In one embodiment of this application, the electrolyte includes a nitrile compound, and based on the mass of the electrolyte, the nitrile compound has a mass percentage of A7%, where 0.01<A7<9.8, preferably, 2.8≤A7≤6.8. For example, A7 can be 0.01, 0.1, 0.5, 1.8, 2.8, 3.8, 4.8, 5.8, 6.8, 7.8, 8.8, 9.8, or in a range defined by any two of these values. The nitrile compound includes at least one selected from the group consisting of malononitrile, succinonitrile (SN), glutaronitrile, adiponitrile (ADN), pimelonitrile, suberonitrile, 3,3'-oxydipropionitrile, hex-2-enedonitrile, fumaronitrile, 2-pentenedonitrile, methylglutaronitrile, 4-cyanopimelonitrile, (Z)-But-2-enedonitrile, 2,2,3,3-tetrafluorobutanedinitrile, ethylene glycol bis(propionitrile) ether, 1,3,6-hexane trinitrile (HTCN), 1,3,5-pentanetricarbonitrile, 4-(2-cyanoethyl)heptane dinitrile, and 1,2,3-tris(2-cyanoethoxy)propane. By controlling the inclusion of nitrile compound in the electrolyte, the type of nitrile compound, and the value of A7 within the range of this application, the damage of the separator polymer coating to the positive electrode material can be suppressed, resulting in better cycle life of the secondary battery.

In one embodiment of this application, the electrolyte further includes a compound of formula (I): 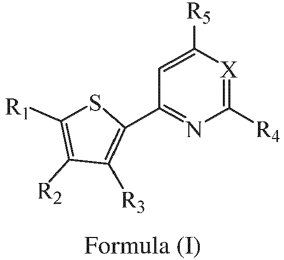 where X is selected from CR₆ or N; R₁, R₂, and R₃ are each independently selected from a hydrogen atom, a halogen, a C2-C5 carbonyl group, a C1-C5 aldehyde group, an unsubstituted or Ra-substituted C1-C5 alkyl group, an unsubstituted or Ra-substituted C2-C5 alkenyl group, an unsubstituted or Ra-substituted C2-C5 alkynyl group, an unsubstituted or Ra-substituted C3-C5 N heterocycloalkyl group, or a C3-C5 N heteroaryl group; R₄, R₅ and R₆ are each independently selected from a hydrogen atom, a C1-C5 alkylthio group, C2-C5 thioether, a C3-C5 N heterocycloalkyl group, a C3-C5 N heteroaryl group, an unsubstituted or Ra-substituted C1-C5 alkyl group, an unsubstituted or Ra-substituted C2-C5 alkenyl group, an unsubstituted or Ra-substituted C2-C5 alkynyl group; and the substituent Ra of each group is independently selected from halogen, a C1-C5 aldehyde group, a C2-C5 carbonyl group, a C2-C5 ester group, a sulfonic acid group, an amino group, a C2-C5 amide group, and a cyano group.

Based on the mass of the electrolyte, the compound of formula (I) has a mass percentage of A3%, wherein 0.01≤A3≤5. For example, A3 can be 0.01, 0.03, 0.05, 0.07, 0.09, 0.1, 0.3, 0.5, 0.7, 0.9, 1, 1.5, 2, 2.5, 3, 3.5, 4, 4.5, 5, or in a range defined by any two of these values. By controlling the inclusion of the compound of formula (I) in the electrolyte, the type of the compound of formula (I), and the value of A3 within the range of this application, a more stable positive electrode electrolyte interface film can be formed on the surface of the positive electrode material layer. The positive electrode electrolyte interface film contains organic polymer components, which can further improve the contact between the positive electrode material layer and the separator, facilitating lithium-ion transport and improving the cycle life of the secondary battery.

In one embodiment of this application, the compound of formula (I) is at least one selected from the following compounds:

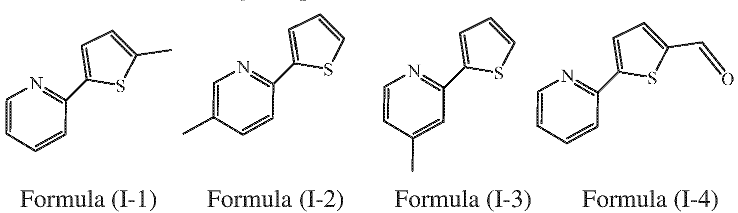

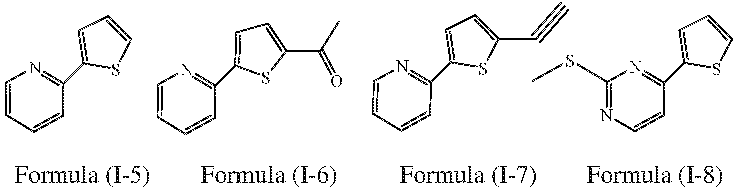

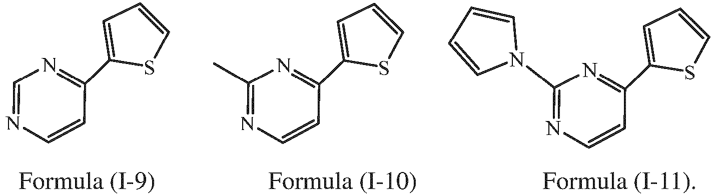

By selecting the above compound of formula (I), a positive electrode electrolyte interface film with good ion diffusion performance and stability can be formed on the surface of the positive electrode active material. The positive electrode electrolyte interface film contains organic polymer components, which can further improve the contact between the positive electrode material layer and the separator, facilitating lithium-ion transport and improving the cycle life of the secondary battery.

In this application, the electrolyte includes a lithium salt. The lithium salt can include various lithium salts commonly used in the field, such as at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, Li₂SiF₆, lithium bis(oxalato)borate (LiBOB), or lithium difluoroborate. Based on the mass of the electrolyte, the lithium salt has a mass percentage of A4 ranging from 8% to 17%.

In this application, the electrolyte further includes another non-aqueous solvent. The another non-aqueous solvent can include at least one of a cyclic ester, an ether compound, or another organic solvent. The aforementioned cyclic ester can include but is not limited to at least one of ethylene carbonate (EC), propylene carbonate (PC), butylene carbonate (BC), vinylene carbonate (VEC), γ-butyrolactone, decanolactone, valerolactone, or caprolactone. The aforementioned ether compound can include but is not limited to at least one of dibutyl ether, tetraglyme, diglyme, 1,2-dimethoxyethane, 1,2-diethoxyethane, 1-ethoxy-1-methoxy ethane, 2-methyltetrahydrofuran, or tetrahydrofuran. The another organic solvent can include but is not limited to at least one of dimethyl sulfoxide, 1,2-dioxolane, cyclobutanone, methyl cyclobutanone, 1,3-dimethyl-2-imidazolidinone, N-methyl-2-pyrrolidone, dimethylformamide, acetonitrile, trimethyl phosphate, triethyl phosphate, or trioctyl phosphate. Based on the total mass of the electrolyte, the another non-aqueous solvent has a mass percentage of A5 ranging from 4% to 90%.

In one embodiment of this application, the electrolyte can include a linear ester, another non-aqueous solvent, and a lithium salt. The mass percentages of the linear ester and lithium salt are as described above, and the another non-aqueous solvent has a mass percentage of A5 ranging from 13% to 72%. A secondary battery including the above electrolyte exhibits good cycling performance.

In one embodiment of this application, the electrolyte can include ethyl 2,2-difluoroacetate, another non-aqueous solvent, and lithium salt. The mass percentages of ethyl 2,2-difluoroacetate and lithium salt are as described above, and the another non-aqueous solvent has a mass percentage of A5 ranging from 63% to 90%. A secondary battery including the above electrolyte exhibits good cycling performance.

In one embodiment of this application, the electrolyte can include a linear ester, another non-aqueous solvent, a lithium salt, and ethyl 2,2-difluoroacetate. The mass percentages of the linear ester, lithium salt, and ethyl 2,2-difluoroacetate are as described above, and the another non-aqueous solvent has a mass percentage of A5 ranging from 20% to 43%. A secondary battery including the above electrolyte exhibits good cycling performance.

In one embodiment of this application, the electrolyte can include a linear ester, another non-aqueous solvent, lithium salt, and a sulfur-oxygen double bond compound. The mass percentages of the linear ester, lithium salt, and sulfur-oxygen double bond compound are as described above, and the another non-aqueous solvent has a mass percentage of A5 ranging from 9% to 71%. A secondary battery including the above electrolyte exhibits good cycling performance.

In one embodiment of this application, the electrolyte can include a nitrile compound, a sulfur-oxygen double bond compound, a linear ester, another non-aqueous solvent, and a lithium salt. The mass percentages of the nitrile compound, sulfur-oxygen double bond compound, linear ester, and lithium salt are as described above, and the another non-aqueous solvent has a mass percentage of A5 ranging from 21% to 49%. A secondary battery including the above electrolyte exhibits good cycling performance.

In one embodiment of this application, the electrolyte can include a linear ester, another non-aqueous solvent, a lithium salt, and a compound of formula (I). The mass percentages of the linear ester, lithium salt, and compound of formula (I) are as described above, and the another non-aqueous solvent has a mass percentage of A5 ranging from 8% to 71%. A secondary battery including the above electrolyte exhibits good cycling performance.

This application does not impose any particular restrictions on the method of controlling the mass m g of the electrolyte in the secondary battery, as long as the purpose of this application is achieved. For example, the mass of the electrolyte injected into the secondary battery can be controlled to regulate the mass of the electrolyte in the secondary battery.

In this application, the positive electrode plate includes a positive electrode current collector and a positive electrode material layer disposed on at least one surface of the positive electrode current collector. The "positive electrode material layer disposed on at least one surface of the positive electrode current collector" means that the positive electrode material layer can be disposed on one surface of the positive electrode current collector along its thickness direction, or it can be disposed on both surfaces of the positive electrode current collector along its thickness direction. It should be noted that the term "surface" here can refer to the entire region of the positive electrode current collector or a portion thereof. This application does not impose any particular restrictions, as long as the purpose of this application is achieved. This application does not impose any particular restrictions on the positive electrode current collector as long as the purpose of this application is achieved. For example, the positive electrode current collector can include aluminum foil, aluminum alloy foil, nickel foil, stainless steel foil, titanium foil, foam nickel, foam copper, or composite current collectors such as aluminum-carbon composite current collectors.

The positive electrode material layer in this application includes a positive electrode active material. This application does not impose any particular restrictions on the positive electrode active material as long as the purpose of this application is achieved. For example, the positive electrode active material can include at least one of nickel cobalt manganese oxide (such as commonly used NCM811, NCM622, NCM523, NCM111), lithium nickel cobalt aluminum oxide, lithium iron phosphate, lithiated manganese-rich materials, lithium cobalt oxide (LiCoO₂), lithium manganese oxide, lithium iron manganese phosphate, or lithium titanate. The positive electrode material layer in this application further includes at least one of a conductive agent and a binder. This application does not impose any particular restrictions on the type of conductive agent. It can include but is not limited to at least one of conductive carbon black, carbon nanotubes (CNTs), carbon fibers, graphite flakes, graphene, metal materials, or conductive polymers. The carbon nanotubes mentioned above can include single-walled carbon nanotubes and/or multi-walled carbon nanotubes. The carbon fibers mentioned above can include vapor-grown carbon fibers (VGCF) and/or nanocarbon fibers. The metal materials mentioned above can include metal powders and/or metal fibers. Specifically, the metal can include but is not limited to at least one of copper, nickel, aluminum, or silver. The conductive polymers mentioned above can include but are not limited to at least one of polyphenylene derivatives, polyaniline, polythiophene, polyacetylene, or polypyrrole. This application does not impose any particular restrictions on the binder as long as the purpose of this application is achieved. For example, the binder can include but is not limited to polyacrylates, polyimides, polyamides, polyimide-imides, polyvinylidene fluoride (PVDF), styrene-butadiene rubber (SBR), sodium alginate, polyvinyl alcohol, polytetrafluoroethylene, polyacrylonitrile, carboxymethyl cellulose sodium, carboxymethyl cellulose potassium, hydroxyethyl cellulose sodium, or hydroxyethyl cellulose potassium. This application does not impose any particular restrictions on the mass ratio of the positive electrode active material, conductive agent, and binder. Those skilled in the art can select them according to actual needs, as long as the purpose of this application is achieved.

This application does not impose any particular restrictions on the thickness of the positive electrode current collector as long as the purpose of this application is achieved. For example, the thickness of the positive electrode current collector can range from 5 µm to 20 µm. This application does not impose any particular restrictions on the thickness of the positive electrode material layer as long as the purpose of this application is achieved. For example, the thickness of the positive electrode material layer on one surface of the positive electrode current collector can range from 15 µm to 500 µm. This application does not impose any particular restrictions on the thickness of the positive electrode plate as long as the purpose of this application is achieved. For example, the thickness of the positive electrode plate can range from 20 µm to 500 µm.

Optionally, the positive electrode plate may further include a conducting layer, which is located between the positive electrode current collector and the positive electrode material layer. This application does not impose any particular restrictions on the composition of the conducting layer, and it can be a commonly used conducting layer in the field. The conducting layer includes a conductive agent and a binder. This application does not impose any particular restrictions on the conductive agent and binder in the conducting layer. The conductive agent and the binder can be respectively at least one of the conductive agents and the binders mentioned above. This application does not impose any particular restrictions on the mass ratio of the conductive agent and binder in the conducting layer. Those skilled in the art can select them according to actual needs, as long as the purpose of this application is achieved.

In this application, the negative electrode plate includes a negative electrode current collector and a negative electrode material layer disposed on at least one surface of the negative electrode current collector. The "a negative electrode material layer disposed on at least one surface of the negative electrode current collector" means that the negative electrode material layer can be disposed on one surface of the negative electrode current collector along its thickness direction, or it can be disposed on both surfaces of the negative electrode current collector along its thickness direction. It should be noted that the term "surface" here can refer to the entire region of the negative electrode current collector or a portion thereof. This application does not impose any particular restrictions, as long as the purpose of this application is achieved. This application does not impose any particular restrictions on the negative electrode current collector as long as the purpose of this application is achieved. For example, it can include copper foil, copper alloy foil, nickel foil, stainless steel foil, titanium foil, foam nickel, foam copper, or composite current collectors.

The negative electrode material layer in this application includes a negative electrode active material. This application does not impose any particular restrictions on the negative electrode active material as long as the purpose of this application is achieved. For example, the negative electrode active material can include at least one of natural graphite, artificial graphite, mesocarbon microbeads (MCMB), hard carbon, soft carbon, silicon, silicon-carbon composite, SiOₓ (0.5<x<1.6), Li-Sn alloy, Li-Sn-O alloy, Sn, SnO, SnO₂, spinel lithium titanium oxide Li₄Ti₅O₁₂, Li-Al alloy, or metallic lithium. The negative electrode material layer in this application further includes a binder and a thickening agent. This application does not impose any particular restrictions on the binder and thickening agent in the negative electrode material layer as long as the purpose of this application is achieved. For example, the binder can be at least one of the binders mentioned above, and the thickening agent can include but is not limited to carboxymethyl cellulose sodium. The negative electrode material layer in this application further includes a conductive agent. This application does not impose any particular restrictions on the conductive agent in the negative electrode material layer as long as the purpose of this application is achieved. For example, the conductive agent can be at least one of the conductive agents mentioned above. This application does not impose any particular restrictions on the mass ratio of the negative electrode active material, binder, and thickening agent in the negative electrode material layer. Those skilled in the art can select them according to actual needs, as long as the purpose of this application is achieved.

This application does not impose any particular restrictions on the thickness of the negative electrode current collector as long as the purpose of this application is achieved. For example, the thickness of the negative electrode current collector can range from 4 µm to 12 µm. This application does not impose any particular restrictions on the thickness of the negative electrode material layer as long as the purpose of this application is achieved. For example, the thickness of the negative electrode material layer on one surface of the negative electrode current collector can range from 30 µm to 500 µm. This application does not impose any particular restrictions on the thickness of the negative electrode plate as long as the purpose of this application is achieved. For example, the thickness of the negative electrode plate can range from 30 µm to 500 µm.

Optionally, the negative electrode plate may include a conducting layer, which is located between the negative electrode current collector and the negative electrode material layer. This application does not impose any particular restrictions on the composition of the conducting layer, and it can be a commonly used conducting layer in the field. The conducting layer includes a conductive agent and a binder. This application does not impose any particular restrictions on the conductive agent and binder in the conducting layer. They can be respectively at least one of the conductive agents and binders mentioned above. This application does not impose any particular restrictions on the mass ratio of the conductive agent and binder in the conducting layer. Those skilled in the art can select them according to actual needs, as long as the purpose of this application is achieved.

Typically, the capacity of a secondary battery is indicated on the secondary battery packaging. In this application, the capacity of the secondary battery can be obtained by obtaining capacity information from the secondary battery packaging or conducting capacity testing on the secondary battery. Preferably, the capacity information of the secondary battery can be obtained from the battery packaging. The above-mentioned capacity testing refers to the "capacity testing" method in the "Testing methods and equipment" section of this application.

This application does not impose any particular restrictions on the method of regulating the capacity (C Ah) of the secondary battery, as long as the purpose of this application is achieved. For example, the capacity of the secondary battery can be controlled by controlling the coating process of the secondary battery, such as controlling the coating weight of the positive electrode plate and/or negative electrode plate. For example, the capacity of the secondary battery can be controlled by controlling the thickness of the positive electrode material layer. For example, increasing the thickness of the positive electrode material layer leads to an increase in C, while decreasing the thickness of the positive electrode material layer leads to a decrease in C.

In this application, the separator is used to separate the positive electrode plate and the negative electrode plate, prevent internal short circuits in the secondary battery, allow free movement of electrolyte ions, and not interfere with the electrochemical charging and discharging processes. This application does not impose any particular restrictions on the separator as long as the purpose of this application is achieved. For example, the separator material can include but is not limited to polyethylene (PE), polypropylene (PP)-based polyolefins (PO), polyesters (such as polyethylene terephthalate (PET) film), cellulose, polyimide (PI), polyamide (PA), aramid, or at least one of them. The type of the separator can include at least one of woven film, non-woven film, microporous film, composite film, calendered film, or spunbonded film.

In this application, the separator can include a substrate and a surface treatment layer. The substrate can be a non-woven fabric or a composite film with a porous structure. The material of the substrate can include at least one of polyethylene, polypropylene, polyethylene terephthalate, or polyimide. Optionally, polypropylene porous film, polyethylene porous film, polypropylene non-woven fabric, polyethylene non-woven fabric, or polypropylene-polyethylene-polypropylene porous composite film can be used. Optionally, at least one surface of the substrate can be provided with a surface treatment layer, which can be a polymer layer, an inorganic layer, or a layer formed by a mixture of polymers and inorganic materials. For example, the inorganic layer can include inorganic particles and a binder. This application does not impose any particular restrictions on the inorganic particles mentioned above. For example, the inorganic particles can include at least one of alumina, silica, magnesium oxide, titanium oxide, hafnium oxide, tin oxide, cerium oxide, nickel oxide, zinc oxide, calcium oxide, zirconium oxide, yttrium oxide, silicon carbide, boehmite, aluminum hydroxide, magnesium hydroxide, or barium sulfate. This application imposes no particular limitations on the binder mentioned above, which can be at least one of the binders mentioned above. The polymer layer in this application includes a polymer. The material of the polymer can include at least one of polyamide, polyacrylonitrile, acrylic polymer, polyacrylic acid, polyvinylpyrrolidone, polyvinyl ether, or polyvinylidene fluoride-co-hexafluoropropylene (vinylidene fluoride-hexafluoropropylene).

The secondary battery of this application further includes a packaging bag for accommodating the positive electrode plate, separator, negative electrode plate, and electrolyte, as well as other known components in the field. This application does not impose any particular restrictions on the other components mentioned above. This application does not impose any particular restrictions on the packaging bag as long as the purpose of this application is achieved. For example, it can be a packaging bag known in the field.

In this application, the secondary battery can include, but is not limited to, a lithium metal secondary battery, a lithium-ion secondary battery (lithium-ion battery), a lithium polymer secondary battery, and a lithium-ion polymer secondary battery.

The preparation process of the secondary battery in this application is well known to those skilled in the art, and this application does not impose any particular restrictions. For example, it can include but is not limited to the following steps: stacking the positive electrode plate, separator, and negative electrode plate in order and winding, folding, or other operations to obtain a wound electrode assembly; placing the electrode assembly into the packaging bag, injecting the electrolyte into the packaging bag, and sealing it to obtain the secondary battery; or stacking the positive electrode plate, separator, and negative electrode plate in order, fixing the four corners of the stacked structure with tape to obtain a stacked electrode assembly, placing the electrode assembly into the packaging bag, injecting the electrolyte into the packaging bag, and sealing it to obtain the secondary battery. Additionally, overcurrent protection devices, current collectors, and other components can be placed in the packaging bag as needed to prevent pressure rise, overcharging, and overdischarging inside the secondary battery. The packaging bag can be a known packaging bag in the field, and this application does not impose any particular restrictions.

According to a second aspect of this application, an electronic apparatus is provided, which includes the secondary battery as described in any of the above embodiments. Therefore, the electronic apparatus provided by this application has good performance.

This application does not impose any particular restrictions on the type of electronic apparatus, and it can be any electronic apparatus known in the prior art. In some embodiments, the electronic apparatus can include, but is not limited to, laptop computers, pen input computers, mobile computers, e-book players, mobile phones, portable fax machines, portable copiers, portable printers, head-mounted stereo headphones, video recorders, LCD televisions, handheld cleaners, portable CD players, mini discs, transceivers, electronic notebooks, calculators, memory cards, portable recorders, radios, backup power supplies, motors, automobiles, motorcycles, electric bicycles, bicycles, lighting devices, toys, game consoles, clocks, power tools, flashlights, cameras, large-scale batteries for household use, and lithium-ion capacitors, among others.

### Examples

Below, specific examples and comparative examples are provided to further illustrate the implementation method of this application. Various tests and evaluations are conducted according to the following methods. Additionally, unless otherwise specified, "parts" and "%" are based on mass.

### Testing methods and equipment:

### Quality testing of electrolyte:

A lithium-ion battery was discharged at a constant current of 0.2C to 3.0V. The weight of the lithium-ion battery was measured and recorded as m1. Then, the lithium-ion battery was disassembled, and the electrode assembly containing the electrode tabs and adhesive component and the packaging bag aluminum-plastic film were extracted in high-purity acetonitrile (purity of 99.9%). The extracted electrode assembly containing the electrode tabs and adhesive component and the packaging bag aluminum-plastic film were dried at 60°C in a vacuum oven for 12 hours. The dried electrode assembly containing the electrode tabs and adhesive component and the packaging bag aluminum-plastic film were weighed, and the total mass was recorded as m². The mass of the electrolyte was calculated as m = m1 - m2.

### Capacity testing:

Under the 25°C condition, the lithium-ion battery was discharged at a constant current of 0.5C to 3.0V, left to stand for 5 minutes, then charged at a constant current of 0.5C to 4.5V, and charged at a constant voltage of 4.5V until the current reaches 0.05C. After a 5-minute rest, the battery was discharged at a constant current of 0.2C to 3.0V. The discharge capacity of the lithium-ion battery at this point was recorded as the battery's capacity C.

### Room temperature cycling performance testing:

Under the 25°C condition, the lithium-ion battery was charged at a constant current of 1.2C to 4.25V, charged at a constant voltage of 4.25V until the current reaches 0.7C, then charged at a constant current of 0.7C to 4.5V, and charged at a constant voltage of 4.5V until the current reaches 0.05C. After a 5-minute rest, the battery was discharged at a constant current of 0.5C to 3.0V. This was considered the first cycle, and the discharge capacity of the first cycle was recorded. The lithium-ion battery was cycled multiple times under the above conditions, and the discharge capacity of the battery was measured after each cycle. Taking the discharge capacity of the first cycle as 100%, the ratio of the discharge capacity of each cycle to the discharge capacity of the first cycle was defined as the capacity retention rate for the corresponding cycle. The test was stopped when the capacity retention rate decreases to 80%, and the number of cycles (the battery's cycle life) was recorded as an indicator for evaluating the room temperature cycling performance of the lithium-ion battery.

### Example 1-1

### <Preparation of electrolyte>

In an argon atmosphere glove box with a moisture content less than 10 ppm, ethylene carbonate (EC), propylene carbonate (PC), and diethyl carbonate (DEC) were uniformly mixed at a mass ratio of 10:30:60 to obtain a base mixture. Lithium salt LiPF6 was then added to the base mixture. The mixture was stirred thoroughly to obtain an electrolyte. Based on the total mass of the electrolyte, the mass percentage A4 of LiPF6 was 12%, the mass percentage A1 of linear carbonates carbonic diethyl carbonate was 52.62%, and the remainder was other non-aqueous solvents. Other non-aqueous organic solvents included EC and PC, and the mass percentage A5 of other non-aqueous organic solvents was 35.38%.

### <Preparation of positive electrode plate>

The positive electrode active material LiCoO₂, conductive agent conductive carbon black, and binder PVDF were mixed in a mass ratio of 95:2:3. N-methyl-2-pyrrolidone (NMP) was added, and the mixture was stirred under vacuum to obtain a positive electrode slurry with a solid content of 70 wt%. The positive electrode slurry was uniformly coated on one surface of an aluminum foil current collector with a thickness of 9 µm. The coated foil was dried at 85°C for 4 hours to obtain a positive electrode plate with a coated material layer thickness of 110 µm and a width of 74 mm. The same steps were repeated on the other surface of the aluminum foil to obtain a positive electrode plate with a coated material layer on both sides. After cold pressing, cutting, and slitting, positive electrode plates with dimensions of 74 mm × 867 mm were obtained. The compacted density of the positive electrode material layer after cold pressing was 4.23 g/cm3.

### <Preparation of negative electrode plate>

The negative electrode active material artificial graphite, binder styrene-butadiene rubber, and thickener carboxymethyl cellulose sodium were mixed in a mass ratio of 95:2:3. Deionized water was added, and the mixture was stirred under vacuum to obtain a negative electrode slurry with a solid content of 75 wt%. The negative electrode slurry was uniformly coated on one surface of a copper foil current collector with a thickness of 5 µm. The coated foil was dried at 85°C for 4 hours to obtain a negative electrode plate with a coated material layer thickness of 130 µm and a width of 76.6 mm. The same steps were repeated on the other surface of the copper foil to obtain a negative electrode plate with a coated material layer on both sides. After cold pressing, cutting, and slitting, negative electrode plates with dimensions of 76.6 mm × 875 mm were obtained. The compacted density of the negative electrode material layer after cold pressing was 1.7 g/cm3.

### <Preparation of separator>

A binder PVDF and inorganic particles aluminum oxide were mixed in a mass ratio of 1:2. NMP was added as a solvent to prepare an inorganic layer slurry with a solid content of 12 wt%. The slurry was stirred uniformly, and the inorganic layer slurry was evenly coated on one surface of a polyethylene substrate with a thickness of 5 µm. The coated substrate was dried at 85°C for 4 hours to obtain a separator with a coated inorganic layer thickness of 2 µm. Then, PVDF was added to NMP solvent and stirred uniformly to prepare a polymer layer slurry with a solid content of 25 wt%. The polymer layer slurry was evenly coated on the surface of the inorganic layer. The surface density of the coated polymer layer was 0.15 mg/cm2. The coated substrate was dried at 85°C for 4 hours. Finally, the polymer layer slurry was uniformly coated on the other surface of the polyethylene substrate. The surface density of the coated polymer layer was 0.15 mg/cm2. The coated substrate was dried at 85°C for 4 hours. The result was a separator with one side coated with an inorganic layer and a polymer layer, and the other side coated only with a polymer layer.

### <Preparation of lithium-ion battery>

The prepared positive electrode plate, separator, and negative electrode plate were stacked in order, with the side of the separator coated with an inorganic layer and a polymer layer facing the positive electrode plate, and the side coated only with a polymer layer facing the negative electrode plate, so that the separator was sandwiched between the positive and negative electrode plates to provide isolation. Then, they were wound to produce an electrode assembly. Tab welding was performed on the electrode assembly, and one adhesive component was placed on the electrode assembly as shown in FIG. 1. The adhesive component was centered along the X direction, with a distance of 25.1 mm from the first edge. The width of the electrode assembly was 57 mm, and the adhesive component was green adhesive. Then, the electrode assembly was placed in an aluminum-plastic film packaging bag and dried in a vacuum oven at 85°C for 12 hours to remove moisture. The electrolyte mentioned above was injected, and the lithium-ion battery was obtained through vacuum sealing, standing, formation, and shaping processes. The width W of a single adhesive component was 6.8 mm, and the length L was 25 mm. The area S1 of a single adhesive component, the total area S of the adhesive components, the number N of adhesive components, the thickness D of the adhesive component, the mass m of the electrolyte, the capacity (C) of the secondary battery, the electrolyte retention range Q, and the value of S/Q were shown in Table 1.

### Example 1-2 to example 1-3

Except for adjusting the relevant preparation parameters according to Table 1 and disposing the adhesive component as shown in FIG. 1, the rest is the same as Example 1-1. In the X direction, the adhesive component is centrally positioned, and the distance of the adhesive component from the first edge is (57-W)/2 mm.

### Example 1-4

Except for adjusting the relevant preparation parameters according to Table 1 and disposing the adhesive component as shown in FIG. 3, the rest is the same as Example 1-1. The distance of the adhesive component from the first edge is (57-W)/2 mm.

### Example 1-5

Except for adjusting the relevant preparation parameters according to Table 1 and disposing the adhesive component as shown in FIG. 6, the rest is the same as Example 1-1. The distance of the adhesive component from the first edge is L1=5 mm, and the distance of the adhesive component from the second edge is L2=5 mm. The width of the electrode assembly is 85 mm.

### Example 1-6

Except for adjusting the relevant preparation parameters according to Table 1 and disposing the adhesive component as shown in FIG. 7, the rest is the same as Example 1-1. The distance of the adhesive component from the first edge is L1=5 mm, and the distance of the adhesive component from the second edge is L2=5 mm. The distance between the two adhesive components is L3=7.5 mm. The distance of the adhesive component from the first edge is L4=13 mm, and the distance of the adhesive component from the second edge is L5=13 mm. The distance between the two adhesive components is L6=19 mm. The width of the electrode assembly is 85 mm.

### Example 1-7 to Example 1-9

Except for adjusting the relevant preparation parameters according to Table 1 and disposing the adhesive component as shown in FIG. 1, the rest is the same as Example 1-1. In the X direction, the adhesive component is centrally positioned, and the distance of the adhesive component from the first edge is (57-W)/2 mm.

### Example 1-10

Except for adjusting the relevant preparation parameters according to Table 1 and disposing the adhesive component as shown in FIG. 2, the rest is the same as Example 1-1. The distance of the adhesive component from the first edge is (57-W)/2 mm.

### Example 1-11

Except for adjusting the relevant preparation parameters according to Table 1 and disposing the adhesive component as shown in FIG. 4, the rest is the same as Example 1-1. The distance of the adhesive component from the first edge is L4=5 mm, and the distance of the adhesive component from the second edge is L5=5 mm. The width of the electrode assembly is 57 mm.

### Example 1-12

Except for adjusting the relevant preparation parameters according to Table 1 and disposing the adhesive component as shown in FIG. 5, the rest is the same as Example 1-1. Two adhesive components pass through the same side surface. One adhesive component is at a distance of L4=10 mm from the first edge, and the other adhesive component is at a distance of L5=10 mm from the second edge. The third adhesive component is at a distance of 30.5 mm from the first edge. The width of the electrode assembly is 85 mm.

### Example 1-13

Except for adjusting the relevant preparation parameters according to Table 1, the rest is the same as Example 1-5. The distance of the adhesive component from the first edge is L1=5 mm, and the distance of the adhesive component from the second edge is L2=5 mm. The distance of the adhesive component from the first edge is L4=10 mm, and the distance of the adhesive component from the second edge is L5=10 mm. The width of the electrode assembly is 85 mm.

### Example 1-14

Except for adjusting the relevant preparation parameters according to Table 1, the rest is the same as Example 1-6. The distance of the adhesive component from the first edge is L1=5 mm, and the distance of the adhesive component from the second edge is L2=5 mm. The distance between the two adhesive components is L3=15 mm. The distance of the adhesive component from the first edge is L4=15 mm, and the distance of the adhesive component from the second edge is L5=15 mm. The distance between the two adhesive components is L6=25 mm. The width of the electrode assembly is 85 mm.

### Example 1-15 to Example 1-16

Except for adjusting the relevant preparation parameters according to Table 1 and disposing the adhesive component as shown in FIG. 1, the rest is the same as Example 1-1. In the X direction, the adhesive component is centrally positioned, and the distance of the adhesive component from the first edge is (57-W)/2 mm.

### Example 1-17 to Example 1-24

Except for adjusting the relevant preparation parameters according to Table 1, the rest is the same as Example 1-4. The distance of the adhesive component from the first edge is (57-W)/2 mm.

### Example 1-25

Except for adjusting the relevant preparation parameters according to Table 1, the rest is the same as Example 1-6. The distance of the adhesive component from the first edge is L1=3 mm, and the distance of the adhesive component from the second edge is L2=3 mm. The distance between the two adhesive components is L3=9.5 mm. The distance of the adhesive component from the first edge is L4=15 mm, and the distance of the adhesive component from the second edge is L5=15 mm. The distance between the two adhesive components is L6=15 mm. The width of the electrode assembly is 85 mm.

### Example 1-26 to Example 1-27

Except for adjusting the relevant preparation parameters according to Table 1 and disposing the adhesive component as shown in FIG. 1, the rest is the same as Example 1-1. In the X direction, the adhesive component is centrally positioned, and the distance of the adhesive component from the first edge is (57-W)/2 mm.

### Example 1-28 to Example 1-29

Except for adjusting the relevant preparation parameters according to Table 1, the rest is the same as Example 1-4. The distance of the adhesive component from the first edge is (57-W)/2 mm.

### Example 1-30

Except for preparing the positive electrode plate, separator, and negative electrode plate in <Preparation of lithium-ion battery> by stacking them in order and fixing the four corners of the entire stacked structure with tape to obtain the electrode assembly in sheet form, and adjusting the relevant preparation parameters according to Table 1, and disposing 6 adhesive components as shown in FIG. 10, the rest is the same as Example 1-1. The distance of the adhesive component from the first edge is L1=10 mm, and the distance of the adhesive component from the second edge is L2=10 mm. The distance of the adhesive component from the first edge is L4=15 mm, and the distance of the adhesive component from the second edge is L5=15 mm. The distance between the two adhesive components is L6=25 mm. The distance of the adhesive component from the third edge is L7=42 mm. The width of the electrode assembly is 85 mm, and the length of the electrode assembly is 99 mm. The positive electrode plate has dimensions of 95 mm × 81 mm, and the negative electrode plate has dimensions of 97 mm × 83 mm.

### Example 1-31

Except for preparing the positive electrode plate, separator, and negative electrode plate in <Preparation of lithium-ion battery> by stacking them in order and fixing the four corners of the entire stacked structure with tape to obtain the electrode assembly in sheet form, and adjusting the relevant preparation parameters according to Table 1, and disposing 7 adhesive components as shown in FIG. 11, the rest is the same as Example 1-1. The distance of the adhesive component from the first edge is L1=5 mm, and the distance of the adhesive component from the second edge is L2=5 mm. The distance between the two adhesive components is L3=15 mm. The distance of the adhesive component from the first edge is L4=15 mm, and the distance of the adhesive component from the second edge is L5=15 mm. The distance between the two adhesive components is L6=25 mm. The distance of the adhesive component from the third edge is L7=42 mm. The width of the electrode assembly is 85 mm, and the length of the electrode assembly is 99 mm. The positive electrode plate has dimensions of 95 mm × 81 mm, and the negative electrode plate has dimensions of 97 mm × 83 mm.

### Example 1-32

Except for preparing the positive electrode plate, separator, and negative electrode plate in <Preparation of lithium-ion battery> by stacking them in order and fixing the four corners of the entire stacked structure with tape to obtain the electrode assembly in sheet form, and adjusting the relevant preparation parameters according to Table 1, and disposing 8 adhesive components as shown in FIG. 12, the rest is the same as Example 1-1. The distance of the adhesive component from the first edge is L1=10 mm, and the distance of the adhesive component from the second edge is L2=10 mm. The distance of the adhesive component from the first edge is L4=15 mm, and the distance of the adhesive component from the second edge is L5=15 mm. The distance between the two adhesive components is L6=25 mm. The distance of the adhesive component from the third edge is L7=25 mm, and the distance of the adhesive component from the fourth edge is L9=25 mm. The distance between the two adhesive components is L8=19 mm. The width of the electrode assembly is 85 mm, and the length of the electrode assembly is 99 mm. The positive electrode plate has dimensions of 95 mm × 81 mm, and the negative electrode plate has dimensions of 97 mm × 83 mm.

### Example 1-33

Except for preparing the positive electrode plate, separator, and negative electrode plate in <Preparation of lithium-ion battery> by stacking them in order and fixing the four corners of the entire stacked structure with tape to obtain the electrode assembly in sheet form, and adjusting the relevant preparation parameters according to Table 1, and disposing 9 adhesive components as shown in FIG. 13, the rest is the same as Example 1-1. The distance of the adhesive component from the first edge is L1=5 mm, and the distance of the adhesive component from the second edge is L2=5 mm. The distance between the two adhesive components is L3=15 mm. The distance of the adhesive component from the first edge is L4=15 mm, and the distance of the adhesive component from the second edge is L5=15 mm. The distance between the two adhesive components is L6=25 mm. The distance of the adhesive component from the third edge is L7=25 mm, and the distance of the adhesive component from the fourth edge is L9=25 mm. The distance between the two adhesive components is L8=19 mm. The width of the electrode assembly is 85 mm, and the length of the electrode assembly is 99 mm. The positive electrode plate has dimensions of 95 mm × 81 mm, and the negative electrode plate has dimensions of 97 mm × 83 mm.

### Example 1-34

Except for preparing the positive electrode plate, separator, and negative electrode plate in <Preparation of lithium-ion battery> by stacking them in order and fixing the four corners of the entire stacked structure with tape to obtain the electrode assembly in sheet form, and adjusting the relevant preparation parameters according to Table 1, and disposing 10 adhesive components as shown in FIG. 14, the rest is the same as Example 1-1. The distance of the adhesive component from the first edge is L1=10 mm, and the distance of the adhesive component from the second edge is L2=10 mm. The distance of the adhesive component from the first edge is L4=15 mm, and the distance of the adhesive component from the second edge is L5=15 mm. The distance between the two adhesive components is L6=25 mm. The distance of the adhesive component from the third edge is L7=25 mm, and the distance of the adhesive component from the fourth edge is L9=25 mm. The distance between the two adhesive components is L8=28.5 mm. The width of the electrode assembly is 85 mm, and the length of the electrode assembly is 152 mm. The positive electrode plate has dimensions of 148 mm × 81 mm, and the negative electrode plate has dimensions of 150 mm × 83 mm.

### Example 2-1 to Example 2-19

Except for adding at least one of the linear ester, sulfur-oxygen double bond compound, or ethyl 2,2-difluoroacetate according to Table 2 in the preparation of electrolyte, adjusting the mass percentage A5 of the another non-aqueous solvent, and keeping the mass percentage A4 of LiPF6 and the EC/PC mass ratio constant, the rest is the same as Example 1-1.

### Example 3-1 to Example 3-8

Except for adding the compound of formula (I) as shown in Table 3 and adjusting the relevant preparation parameters according to Table 3, the rest is the same as Example 2-14. When the mass percentage of the compound of formula (I) changes, the percentage A5 of another non-aqueous solvent changes accordingly, while keeping the EC/PC mass ratio, the mass percentage of the linear ester, and the mass percentage of the lithium salt constant.

### Example 4-1 to Example 4-8

Except for adding the nitrile compound as shown in Table 4 and adjusting the relevant preparation parameters according to Table 4, the rest is the same as Example 2-12. When the mass percentage of the nitrile compound and/or sulfur-oxygen double bond compound changes, the percentage A5 of another non-aqueous solvent changes accordingly, while keeping the EC/PC mass ratio, the mass percentage of the linear ester, and the mass percentage of the lithium salt constant.

### Comparative Example 1

Except for adjusting the relevant preparation parameters according to Table 1, the rest is the same as Example 1-12. Among them, the two adhesive components pass through the same side surface. One adhesive component is at a distance of L4=10 mm from the first edge, and the other adhesive component is at a distance of L5=10 mm from the second edge. The third adhesive component is at a distance of 32.5 mm from the first edge. The width of the electrode assembly is 85 mm.

### Comparative Example 2 to Comparative Example 3

Except for adjusting the relevant preparation parameters according to Table 1 and disposing no adhesive components on the electrode assembly in the section, the rest is the same as Example 1-1.

### Comparative Example 4

Except for adjusting the relevant preparation parameters according to Table 1 and disposing the adhesive components as shown in FIG. 1, the rest is the same as Example 1-1. In the X direction, the adhesive components are centrally positioned, and the distance of the adhesive component from the first edge is (57-W)/2 mm.

In this application, in the examples and comparative examples, when the number of adhesive components is greater than one, the area of each adhesive component is the same.

The preparation parameters and electrochemical performance parameters of each example and comparative example are shown in Table 1 to Table 4.

**Table 1**

| | m (g) | C (Ah) | Q (g/Ah) | S (mm²) | S/Q | W (mm) | L (mm) | S1 (mm²) | N (piece) | D (µm) | Cycles |
|---|---|---|---|---|---|---|---|---|---|---|---|
| Example 1-1 | 10.625 | 5 | 2.125 | 170 | 80 | 6.8 | 25 | 170 | 1 | 17 | 350 |
| Example 1-2 | 4 | 5 | 0.8 | 800 | 1000 | 32 | 25 | 800 | 1 | 17 | 453 |
| Example 1-3 | 6 | 5 | 1.2 | 480 | 400 | 19.2 | 25 | 480 | 1 | 17 | 421 |
| Example 1-4 | 5 | 5 | 1 | 700 | 700 | 17.5 | 20 | 350 | 2 | 17 | 467 |
| Example 1-5 | 5 | 5 | 1 | 2000 | 2000 | 25 | 20 | 500 | 4 | 17 | 465 |
| Example 1-6 | 5 | 5 | 1 | 2500 | 2500 | 20 | 25 | 500 | 5 | 17 | 383 |
| Example 1-7 | 3 | 5 | 0.6 | 360 | 600 | 24 | 15 | 360 | 1 | 17 | 452 |
| Example 1-8 | 6 | 5 | 1.2 | 360 | 300 | 14.4 | 25 | 360 | 1 | 17 | 433 |
| Example 1-9 | 13.5 | 5 | 2.7 | 360 | 133 | 14.4 | 25 | 360 | 1 | 17 | 421 |
| Example 1-10 | 5 | 5 | 1 | 360 | 360 | 14.4 | 25 | 360 | 1 | 17 | 438 |
| Example 1-11 | 5 | 5 | 1 | 540 | 540 | 18 | 15 | 270 | 2 | 17 | 475 |
| Example 1-12 | 5 | 5 | 1 | 1080 | 1080 | 24 | 15 | 360 | 3 | 17 | 488 |
| Example 1-13 | 5 | 5 | 1 | 1440 | 1440 | 24 | 15 | 360 | 4 | 17 | 487 |
| Example 1-14 | 5 | 5 | 1 | 1800 | 1800 | 15 | 24 | 360 | 5 | 17 | 482 |
| Example 1-15 | 5 | 5 | 1 | 400 | 400 | 16 | 25 | 400 | 1 | 17 | 419 |
| Example 1-16 | 5 | 5 | 1 | 810 | 810 | 32.4 | 25 | 810 | 1 | 17 | 433 |
| Example 1-17 | 0.2 | 0.3 | 0.67 | 720 | 1080 | 24 | 15 | 360 | 2 | 17 | 452 |
| Example 1-18 | 6 | 4 | 1.5 | 720 | 480 | 24 | 15 | 360 | 2 | 17 | 420 |
| Example 1-19 | 15 | 8 | 1.875 | 720 | 384 | 24 | 15 | 360 | 2 | 17 | 417 |
| Example 1-20 | 5 | 5 | 1 | 720 | 720 | 24 | 15 | 360 | 2 | 10 | 458 |
| Example 1-21 | 5 | 5 | 1 | 720 | 720 | 24 | 15 | 360 | 2 | 15 | 487 |
| Example 1-22 | 5 | 5 | 1 | 720 | 720 | 24 | 15 | 360 | 2 | 20 | 489 |
| Example 1-23 | 5 | 5 | 1 | 720 | 720 | 24 | 15 | 360 | 2 | 25 | 485 |
| Example 1-24 | 5 | 5 | 1 | 720 | 720 | 24 | 15 | 360 | 2 | 30 | 457 |
| Example 1-25 | 6.4 | 4 | 1.6 | 3500 | 2187.5 | 20 | 35 | 700 | 5 | 17 | 333 |
| Example 1-26 | 2.4 | 4 | 0.6 | 48 | 80 | 4.8 | 10 | 48 | 1 | 17 | 319 |
| Example 1-27 | 6.4 | 4 | 1.6 | 900 | 562.5 | 36 | 25 | 900 | 1 | 17 | 339 |
| Example 1-28 | 4 | 4 | 1 | 720 | 720 | 24 | 15 | 360 | 2 | 5 | 326 |
| Example 1-29 | 4 | 4 | 1 | 720 | 720 | 24 | 15 | 360 | 2 | 40 | 335 |
| Example 1-30 | 5 | 5 | 1 | 2160 | 2160 | 15 | 24 | 360 | 6 | 17 | 485 |
| Example 1-31 | 5 | 5 | 1 | 2100 | 2100 | 15 | 20 | 300 | 7 | 17 | 480 |
| Example 1-32 | 5 | 5 | 1 | 2400 | 2400 | 15 | 20 | 300 | 8 | 17 | 473 |
| Example 1-33 | 5 | 5 | 1 | 2430 | 2430 | 15 | 18 | 270 | 9 | 17 | 475 |
| Example 1-34 | 5 | 5 | 1 | 2400 | 2400 | 15 | 16 | 240 | 10 | 17 | 474 |
| Comparative Example 1 | 2.4 | 4 | 0.6 | 1800 | 3000 | 20 | 30 | 600 | 3 | 17 | 249 |
| Comparative Example 2 | 4.8 | 4 | 1.2 | / | / | / | / | / | 0 | / | 195 |
| Comparative Example 3 | 2 | 4 | 0.5 | / | / | / | / | / | 0 | / | 104 |
| Comparative Example 4 | 5 | 5 | 1 | 50 | 50 | 5 | 10 | 50 | 1 | 17 | 300 |

| | | | | | | | | | | | |
|---|---|---|---|---|---|---|---|---|---|---|---|
| Note: In Table 1, "/" indicates no relevant preparation parameters. When C changes in Table 1, the thickness of the positive electrode material layer is adjusted to achieve the values shown in Table 1. | | | | | | | | | | | |

Referring to Table 1, from Example 1-1 to Example 1-34 and Comparative Example 1 to Comparative Example 4, it can be seen that by controlling the lithium-ion battery, including one or more adhesive components, the placement of the adhesive component, the ratio of the total area of the adhesive component to the electrolyte retention range, and the value of the electrolyte retention range within the range of this application, the lithium-ion battery exhibits a higher cycle count, indicating a longer cycle life. In Comparative Example 1 to Comparative Example 4, the lithium-ion battery exhibits a lower cycle count, indicating a shorter cycle life.

The total area S of the adhesive component usually affects the energy density and cycle life of the lithium-ion battery. From Example 1-1 to Example 1-19 and Example 1-25 to Example 1-34, it can be seen that by controlling the value of S within the range of this application, the lithium-ion battery exhibits a higher cycle count, indicating a longer cycle life.

The mass m of the electrolyte and the capacity C of the secondary battery usually affect the energy density and cycle life of the lithium-ion battery. From Example 1-1 to Example 1-19 and Example 1-25 to Example 1-34, it can be seen that by controlling the values of m and C within the range of this application, the lithium-ion battery exhibits a higher cycle count, indicating a longer cycle life.

The area S1 of a single adhesive component and the number N of adhesive components usually affect the energy density and cycle life of the lithium-ion battery. From Example 1-1 to Example 1-19 and Example 1-25 to Example 1-34, it can be seen that by controlling the values of S1 and N within the range of this application, the lithium-ion battery exhibits a higher cycle count, indicating a longer cycle life.

The thickness D of the adhesive component usually affects the energy density and cycle life of the lithium-ion battery. From Example 1-20 to Example 1-24, it can be seen that by controlling the value of D within the range of this application, the lithium-ion battery exhibits a higher cycle count, indicating a longer cycle life.

**Table 2**

| | Linear ester | A1 (%) | A5 (%) | Sulfur-oxygen double bond compound | A2 (%) | A6 (%) | S1 (mm2) | A1/S1 | m (g) | C (Ah) | Q (g/Ah) | A2×Q | Cycles |
|---|---|---|---|---|---|---|---|---|---|---|---|---|---|
| Example 2-1 | Dimethyl carbonate | 21.6 | 66.4 | / | / | / | 720 | 0.030 | 5 | 5 | 1 | / | 520 |
| Example 2-2 | Ethyl Propionate | 25 | 63 | / | / | / | 50 | 0.500 | 5 | 5 | 1 | / | 503 |
| Example 2-3 | Propyl Propionate | 66 | 22 | / | / | / | 55 | 1.200 | 5 | 5 | 1 | / | 509 |
| Example 2-4 | Diethyl carbonate | 20 | 68 | / | / | / | 360 | 0.056 | 5 | 5 | 1 | / | 515 |
| Example 2-5 | Diethyl carbonate | 70 | 18 | / | / | / | 360 | 0.194 | 5 | 5 | 1 | / | 518 |
| Example 2-6 | Diethyl carbonate | 52.62 | 33.38 | 1,3-propane sultone | 2 | / | 360 | 0.146 | 5 | 5 | 1 | 2 | 620 |
| Example 2-7 | Diethyl carbonate | 52.62 | 35.08 | 1,3-propane sultone | 0.3 | / | 360 | 0.146 | 5 | 5 | 1 | 0.3 | 565 |
| Example 2-8 | Diethyl carbonate | 52.62 | 30.58 | 1,3-propane sultone | 4.8 | / | 360 | 0.146 | 5 | 5 | 1 | 4.8 | 579 |
| Example 2-9 | Diethyl carbonate | 52.62 | 33.38 | Vinyl sulfate | 2 | / | 360 | 0.146 | 5 | 5 | 1 | 2 | 584 |
| Example 2-10 | Diethyl carbonate | 52.62 | 33.38 | 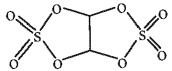 | 2 | / | 360 | 0.146 | 5 | 5 | 1 | 2 | 576 |
| Example 2-11 | Diethyl carbonate | 52.62 | 35.005 | 1,3-propane sultone | 0.375 | / | 360 | 0.146 | 4 | 5 | 0.8 | 0.3 | 542 |
| Example 2-12 | Diethyl carbonate | 52.62 | 32.255 | 1,3-propane sultone | 3.125 | / | 360 | 0.146 | 9 | 5 | 1.6 | 5 | 555 |
| Example 2-13 | Diethyl carbonate | 52.62 | 30.98 | 4% 1,3-propane sultone + 0.4% vinyl sulfate | 4.4 | / | 360 | 0.146 | 12.5 | 5 | 2.5 | 11 | 531 |
| Example 2-14 | Diethyl carbonate | 52.62 | 35.38 | - | / | / | 360 | 0.146 | 5 | 5 | 1 | / | 498 |
| Example 2-15 | Diethyl carbonate | 52.62 | 35.08 | 1,3-propane sultone | 0.3 | / | 360 | 0.146 | 1.8 | 3 | 0.6 | 0.18 | 476 |
| Example 2-16 | Diethyl carbonate | 52.62 | 30.58 | 1,3-propane sultone | 4.8 | / | 360 | 0.146 | 21.6 | 8 | 2.7 | 12.96 | 469 |
| Example 2-17 | Diethyl carbonate | 40 | 46 | / | / | 2 | 360 | 0.11 | 5 | 5 | 1 | / | 515 |
| Example 2-18 | Diethyl carbonate | 40 | 38 | / | / | 10 | 360 | 0.11 | 5 | 5 | 1 | / | 548 |
| Example 2-19 | / | / | 68 | / | / | 20 | 360 | / | 5 | 5 | 1 | / | 502 |

| | | | | | | | | | | | | | |
|---|---|---|---|---|---|---|---|---|---|---|---|---|---|
| Note: (1) In Table 2, "/" indicates no relevant preparation parameters. (2) In Example 2-13 of Table 2, the sulfur-oxygen double bond compound is "4% 1,3-propane sultone + 0.4% vinyl sulfate", indicating that the added sulfur-oxygen double bond compound includes 1,3-propane sultone and vinyl sulfate. Based on the mass of the electrolyte, the mass percentage of 1,3-propane sultone is 4%, and the mass percentage of vinyl sulfate is 0.4%. | | | | | | | | | | | | | |

The type of linear ester and the ratio of the mass percentage A1 of the linear ester to the area S1 of a single adhesive component usually affect the cycle life of the lithium-ion battery. From Example 2-1 to Example 2-5 and Example 2-14, it can be seen that by controlling the type of linear ester and the value of A1/S1 within the range of this application, the lithium-ion battery exhibits a higher cycle count, indicating a longer cycle life.

The mass percentage A1 of the linear ester usually affects the cycle life of the lithium-ion battery. From Example 2-1 to Example 2-5 and Example 2-14, it can be seen that by controlling the value of A1 within the range of this application, the lithium-ion battery exhibits a higher cycle count, indicating a longer cycle life.

The type and mass percentage A2 of the sulfur-oxygen double bond compound usually affect the cycle life of the lithium-ion battery. From Example 2-6 to Example 2-13, it can be seen that by controlling the type and mass percentage A2 of the sulfur-oxygen double bond compound within the range of this application, the lithium-ion battery exhibits a higher cycle count, indicating a longer cycle life.

The mass percentage A2 of the sulfur-oxygen double bond compound multiplied by the electrolyte retention range Q usually affects the cycle life of the lithium-ion battery. From Example 2-11 to Example 2-13 and Example 2-15 to Example 2-16, it can be seen that by controlling the value of A2×Q within the range of this application, the lithium-ion battery exhibits a higher cycle count, indicating a longer cycle life.

The addition of ethyl 2,2-difluoroacetate and its mass percentage A6 in the electrolyte usually affect the cycle life of the lithium-ion battery. From Example 2-17 to Example 2-19, it can be seen that by controlling the addition of ethyl 2,2-difluoroacetate and its mass percentage A6 in the electrolyte within the range of this application, the lithium-ion battery exhibits a higher cycle count, indicating a longer cycle life.

**Table 3**

| | A5 (%) | Compound of formula (I) | A3 (%) | Cycles |
|---|---|---|---|---|
| Example 2-14 | 35.38 | / | / | 498 |
| Example 3-1 | 35.08 | Formula (I-1) | 0.3 | 521 |
| Example 3-2 | 35.37 | Formula (I-1) | 0.01 | 505 |
| Example 3-3 | 30.38 | Formula (I-1) | 5 | 510 |
| Example 3-4 | 35.08 | Formula (I-4) | 0.3 | 518 |
| Example 3-5 | 35.08 | Formula (I-7) | 0.3 | 546 |
| Example 3-6 | 35.08 | Formula (I-8) | 0.3 | 535 |
| Example 3-7 | 35.08 | Formula (I-9) | 0.3 | 527 |
| Example 3-8 | 35.08 | Formula (I-11) | 0.3 | 541 |

The type and mass percentage A3 of the compound of formula (I) usually affect the cycle life of the lithium-ion battery. From Example 3-1 to Example 3-8, it can be seen that by controlling the type and mass percentage A3 of the compound of formula (I) within the range of this application, the lithium-ion battery exhibits a higher cycle count, indicating a longer cycle life.

**Table 4**

| | Nitrile compound | A7 (%) | Sulfur-oxygen double bond compound | A2 (%) | A5 (%) | Cycles |
|---|---|---|---|---|---|---|
| Example 2-12 | / | / | 1,3-propane sultone | 3.125 | 32.255 | 555 |
| Example 4-1 | 2.5% ADN+2% SN+2% HTCN | 6.5 | 1,3-propane sultone | 3.125 | 25.755 | 592 |
| Example 4-2 | 1% ADN+1% SN+2% HTCN | 4 | 1,3-propane sultone | 3.125 | 28.255 | 589 |
| Example 4-3 | SN | 0.01 | 1,3-propane sultone | 3.125 | 32.245 | 568 |
| Example 4-4 | SN | 2.8 | 1,3-propane sultone | 3.125 | 29.455 | 585 |
| Example 4-5 | SN | 5.8 | 1,3-propane sultone | 3.125 | 26.455 | 590 |
| Example 4-6 | SN | 6.8 | 1,3-propane sultone | 3.125 | 25.455 | 582 |
| Example 4-7 | SN | 9.8 | 1,3-propane sultone | 3.125 | 22.455 | 575 |
| Example 4-8 | 2% ADN+2% HTCN | 4 | 3% 1,3-propane sultone + 0.5% vinyl sulfate | 3.5 | 27.88 | 595 |

| | | | | | | |
|---|---|---|---|---|---|---|
| Note: (1) Taking Example 4-1 in Table 4 as an example, the nitrile compound is "2.5% ADN + 2% SN + 2% HTCN," which means that the added nitrile compound includes ADN, SN, and HTC. Based on the mass of the electrolyte, the mass percentage of ADN is 2.5%, the mass percentage of SN is 2%, and the mass percentage of HTCN is 2%. The same applies to other examples. (2) In Example 4-8 in Table 4, the sulfur-oxygen double bond compound is "3% 1,3-propane sultone + 0.5% vinyl sulfate," which means that the added sulfur-oxygen double bond compound includes 1,3-propane sultone and vinyl sulfate. Based on the mass of the electrolyte, the mass percentage of 1,3-propane sultone is 3%, and the mass percentage of vinyl sulfate is 0.5%. | | | | | | |

The type and mass percentage A7 of the nitrile compound usually affect the cycle life of the lithium-ion battery. From Example 4-1 to Example 4-8, it can be seen that by controlling the type and mass percentage A7 of the nitrile compound within the range of this application, the lithium-ion battery exhibits a higher cycle count, indicating a longer cycle life.

It should be noted that in this document, relational terms such as "first" and "second" are used merely to distinguish one entity or operation from another, and do not necessarily imply any actual relationship or order between these entities or operations. Furthermore, the terms "comprise," "include," or any variations thereof are intended to encompass non-exclusive inclusion, such that a process, method, or article including a series of elements includes not only those elements explicitly listed but further includes other elements not explicitly listed, or inherent to such process, method, or article.

Each embodiment described in this specification is presented in a corresponding manner, and the same or similar parts between different embodiments can be cross-referenced. Each embodiment focuses on the differences from other embodiments.

The above description is only exemplary embodiments of this application and should not be construed as limiting this application. Any modifications, equivalents, improvements, and the like made within the spirit and principles of this application should be included within the scope of protection of this application.

## Claims

1. A secondary battery comprising an electrode assembly (10), a tab (21,22), an electrolyte, and one or more adhesive components (30); wherein along a thickness direction of the electrode assembly (10), the electrode assembly (10) comprises a first surface (11) and a second surface (12) disposed opposite to each other, the first surface (11) and the second surface (12) are surfaces formed by a length direction and a width direction of the electrode assembly (10), and the adhesive component (30) extends from the first surface (11) to the second surface (12); wherein
a mass of the electrolyte is m g, a capacity of the secondary battery is C Ah, an electrolyte retention of the secondary battery is Q g/Ah, and an area of the one or more adhesive components (30) is S mm², wherein Q=m/C, 80≤S/Q≤2500, and 0.6≤Q≤2.7.

2. The secondary battery according to claim 1, wherein 400≤S/Q≤2000.

3. The secondary battery according to claim 1, wherein 50≤S≤2500.

4. The secondary battery according to claim 1, wherein 0.2≤m≤15 and 0.3≤C≤8.

5. The secondary battery according to claim 1, wherein an area of each of the one or more adhesive components (30) is S1 mm², 50≤S1≤810; the one or more adhesive components (30) has N adhesive components, 1≤N≤10, and N is a positive integer.

6. The secondary battery according to claim 1, wherein a thickness of each of the one or more adhesive components (30) is D µm, wherein 10≤D≤30.

7. The secondary battery according to claim 6, wherein 15≤D≤25.

8. The secondary battery according to claim 5, wherein the electrolyte comprises a linear ester; and the linear ester comprises at least one selected from the group consisting of a linear carbonate ester and a linear carboxylic ester; wherein
the linear carbonate ester comprises at least one selected from the group consisting of dimethyl carbonate, methyl ethyl carbonate, diethyl carbonate, methyl propyl carbonate, dioctyl carbonate, dipentyl carbonate, ethyl isobutyl carbonate, isopropyl methyl carbonate, di-n-butyl carbonate, di-isopropyl carbonate, and dipropyl carbonate; and
the linear carboxylic ester comprises at least one selected from the group consisting of ethyl acetate, propyl acetate, butyl acetate, ethyl propionate, propyl propionate, butyl butyrate, methyl butyrate, methyl isovalerate, propyl hexanoate, and isobutyl acetate; wherein
based on the mass of the electrolyte, the linear ester has a mass percentage of A1%, wherein 0.03≤A1/S1≤1.2.

9. The secondary battery according to claim 8, wherein 20≤A1≤70.

10. The secondary battery according to claim 1, wherein the electrolyte comprises ethyl 2,2-difluoroacetate; and based on the mass of the electrolyte, the ethyl 2,2-difluoroacetate has a mass percentage of A6%, wherein 2≤A6≤20.

11. The secondary battery according to claim 8, wherein the electrolyte further comprises a sulfur-oxygen double bond compound; and the sulfur-oxygen double bond compound comprises at least one selected from the group consisting of 1,3-propane sultone, vinyl sulfate, propylene sultone, 3-fluoro-1,3-propane sultone, 1,2-propane sultone, 1,4-butane sultone, 2,4-butane sultone, and 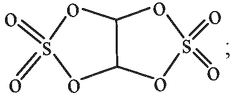 and
based on the mass of the electrolyte, the sulfur-oxygen double bond compound has a mass percentage of A2%, wherein 0.3≤A2≤4.8.

12. The secondary battery according to claim 11, wherein 0.3≤A2×Q≤11.

13. The secondary battery according to claim 11, wherein the electrolyte further comprises a nitrile compound; and based on the mass of the electrolyte, the nitrile compound has a mass percentage of A7%, wherein 0.01<A7<9.8; and the nitrile compound comprises at least one selected from the group consisting of malononitrile, succinonitrile, glutaronitrile, adiponitrile, pimelonitrile, suberonitrile, 3,3'-oxydipropionitrile, hex-2-enedonitrile, fumaronitrile, 2-pentenedonitrile, methylglutaronitrile, 4-cyanopimelonitrile, (Z)-But-2-enedonitrile, 2,2,3,3-tetrafluorobutanedinitrile, ethylene glycol bis(propionitrile) ether, 1,3,6-hexane trinitrile, 1,3,5-pentanetricarbonitrile, 4-(2-cyanoethyl)heptane dinitrile, and 1,2,3-tris(2-cyanoethoxy)propane.

14. The secondary battery according to claim 13, wherein 2.8≤A7≤6.8.

15. An electronic apparatus comprising the secondary battery according to any one of claims 1 to 14.
